# EUROPÄISCHE PATENTSCHRIFT

(11) **EP 3 986 143 B1**
(45) Veröffentlichungstag und Bekanntmachung des Hinweises auf die Patenterteilung: **26.07.2023**
(21) Anmeldenummer: 20732941.8
(22) Anmeldetag: 18.06.2020
(51) Int. Cl.: A23C 3/027, A23L 3/358, A23L 2/46, A23L 3/00, A23L 3/02, C02F 1/44, A23L 3/04, C02F 1/50, C02F 9/00, C12H 1/00, C02F 1/00, C02F 1/76, C02F 5/14, C02F 103/02

(54) **VERFAHREN ZUM BETREIBEN EINER PASTEURISIERUNGSVORRICHTUNG**
METHOD FOR OPERATING A PASTEURIZATION DEVICE
PROCÉDÉ DE FONCTIONNEMENT D'UN DISPOSITIF DE PASTEURISATION

(30) Priorität: 18.06.2019 EP 19180981
(43) Veröffentlichungstag der Anmeldung: 27.04.2022
(73) Patentinhaber: Red Bull GmbH, 5330 Fuschl am See (AT)
(72) Erfinder: CONCIN, Roland, 5330 Fuschl am See (AT); RINDERER, Christian, 5330 Fuschl am See (AT); HANS, Klemens, 5301 Eugendorf (AT); EDER, Harald, 5301 Eugendorf (AT); THONHAUSER, Philip, 2372 Gießhübl (AT); HERZOG, Daniel, 5330 Fuschl am See (AT)
(74) Vertreter: Burger, Hannes
(86) Internationale Anmeldenummer: PCT/EP2020/066998
(87) Internationale Veröffentlichungsnummer: WO 2020/254511

(56) Entgegenhaltungen:
- EP-A1- 3 296 031
- EP-A1- 3 491 934
- WO-A1-2016/100997
- WO-A1-2018/076034
- WO-A1-2018/076035
- WO-A1-2018/162700
- WO-A1-2019/106092
- WO-A2-2011/131963
- DE-A1-102017 111 791
- US-A1- 2015 368 135

## Beschreibung

Die Erfindung betrifft ein Verfahren zum Betreiben einer Pasteurisierungsvorrichtung für die Pasteurisierung von in verschlossenen Behältnissen abgefüllten Lebensmitteln.

Pasteurisieren ist eine Methode vorrangig zum Haltbarmachen von Lebensmitteln durch gezielte Temperierung der Lebensmittel. Die Lebensmittel werden üblicherweise auf ein erhöhtes Temperaturniveau erhitzt, um vermehrungsfähige, lebende Mikroorganismen zu eliminieren. Häufig werden die Lebensmittel vor der Pasteurisierung in Behältnisse abgefüllt, die Behältnisse verschlossen, und zur Temperierung bzw. Pasteurisierung der Lebensmittel eine temperierte bzw. erhitzte Behandlungsflüssigkeit auf eine Außenseite der Behältnisse appliziert. Auf diese Weise kann ein bereits lagerungs- bzw. verkaufsfertiges Produkt bereitgestellt werden.

In solchen Fällen werden zumeist sogenannte Tunnelpasteure eingesetzt, bei welchen mit Lebensmittel befüllte und verschlossenen Behältnisse durch mehrere Behandlungszonen geführt werden, und in einer jeweiligen Behandlungszone mit einer temperierten Behandlungsflüssigkeit übergossen bzw. besprüht werden. Weit verbreitet sind Anlagen, bei welchen die Lebensmittel zuerst in Zonen sukzessive erhitzt und anschließend in weiteren Zonen sukzessive abgekühlt werden. Üblicherweise wird die hierzu verwendete, wässrige Behandlungsflüssigkeit zumindest größtenteils in einem Kreislauf um die Behandlungszonen geführt und fortwährend wiederverwendet. Dies zum einen, um den Frischwasserbedarf ressourcenschonend möglichst gering zu halten. Andererseits kann auf diese Weise auch der zum Temperieren der Behandlungsflüssigkeit erforderliche Energieaufwand gesenkt werden.

Naturgemäß ist allerdings bei einer derartigen, fortwährenden Wiederverwendung einer wässrigen Behandlungsflüssigkeit bzw. fortwährender Kreislaufführung von Behandlungsflüssigkeit nicht vermeidbar, dass mit der Zeit Verunreinigungen in die wässrige Behandlungsflüssigkeit eingetragen werden, wodurch es zu fortschreitender Verschmutzung und folgend auch zu einer Verkeimung der Behandlungsflüssigkeit bzw. dem Behandlungswasser kommt. Quellen für den Eintrag von Verunreinigungen und auch Mikroorganismen können etwa die Umgebungsluft, Kühltürme zum bedarfsweisen Abkühlen der Behandlungsflüssigkeit, Bedienpersonal, Abrieb von Transportmitteln für die Behältnisse oder etwa die Behältnisse selbst, zum Beispiel Mikropartikel von Bedruckungen, Labeln oder Etiketten, und auch der Inhalt der Behältnisse, zum Beispiel im Falle einer Beschädigung der Behältnisse sein.

Die Neigung zur Verkeimung der Behandlungsflüssigkeit in solchen Pasteurisierungsvorrichtungen rührt daher, dass einerseits die zirkulierte bzw. ständig wiederverwendete Behandlungsflüssigkeit mit Nährstoffen angereichert ist, und außerdem aufgrund des Berieselns des zu pasteurisierenden Gutes hoch aerobisiert bzw. mit Sauerstoff gesättigt ist. Außerdem liegen in solchen Tunnelpasteuren zumindest zonenweise in Rohrleitungen und den Behandlungszonen Wasserparameter vor, welche eine Vermehrung der Mikroorganismen begünstigen, beispielsweise aufgrund eines günstigen Temperaturniveaus der Prozesswassers. Dies führt wiederum zur Bildung von Ablagerungen, insbesondere in Form sogenannter Biofilme, welche in bestimmten Zeitintervallen einen Produktions-Stopp und eine Wartung bzw. Reinigung mit anschließender Neubefüllung der Pasteurisierungsanlage erforderlich machen können.

Um dieser Problematik und weiteren Anforderungen an die Behandlungsflüssigkeit, insbesondere hygienischen Anforderungen in Pasteuren Rechnung zu tragen, werden der Behandlungsflüssigkeit gemäß Stand der Technik Chemikalien zur Stabilisierung der wässrigen Behandlungsflüssigkeit bzw. dem Prozesswasser sowie zur Erzielung gewünschter Prozess-Beeinflussungen beigemengt. Die Zugabe dieser Chemikalien erfolgt hierbei gemäß dem Stand der Technik zeitgesteuert und/oder volumengestert. Aufgrund der hohen Temperaturbelastung in solchen Pasteurisierungsvorrichtungen kommt es allerdings zu einem hohen bzw. raschen, chemischen Abbau solcher Prozesschemikalien. Zusätzlich kann ein chemischer Abbau und damit ein allmählicher Rückgang der Konzentration der Prozesschemikalien auch durch chemische Reaktionen der Prozesschemikalien untereinander oder mit Abbauprodukten der Prozesschemikalien oder anderen in der Behandlungsflüssigkeit gelösten Stoffen hervorgerufen werden. Eine zusätzliche Problematik ergibt sich daraus, dass beispielsweise durch das Berieseln der mit Lebensmittel befüllten Behältnisse oder durch Verdampfung fortwährend Teilmengen der zirkulierten, wässrigen Behandlungsflüssigkeit aus einem Umlaufkreislauf einer solchen Pasteurisierungsvorrichtung verloren gehen, und diese Teilmengen durch frische Behandlungsflüssigkeit bzw. Frischwasser ersetzt werden müssen. Hierbei muss häufig auf unterschiedliche Frischwasser-Quellen zurückgegriffen werden, wobei Frischwässer aus unterschiedlichen Quellen stark variierende Qualität bzw. stark variierende Wasserparameter aufweisen können. Außerdem kommt es durch Zuführung von Frischwasser zu einer Verdünnung der zirkulierten, wässrigen Behandlungsflüssigkeit.

Wegen dieser geschilderten Problematiken, wie dem chemischen Abbau der Prozesschemikalien oder unterschiedliche Frischwasser-Qualität zu entsprechen, wird gemäß dem Stand der Technik eine hohe bzw. sogar überhöhte Menge an Prozesschemikalien beigemengt, um die gewünschten Prozess-Effekte sicher zu erzielen. Im Besonderen wird wässrigen Behandlungsflüssigkeit eine weit höhere Menge an Prozesschemikalien zugegeben, als grundsätzlich nötig wäre, bzw. werden Prozesschemikalien überdosiert. Dieser massive Einsatz von Chemikalien ist jedoch sowohl in wirtschaftlicher als auch ökologischer Hinsicht nachteilig. Unter anderem treten hohe Kosten für die große Mengen an Chemikalien sowie deren Lagerung auf. Außerdem kann ein solcher, überhöhter Einsatz von Prozesschemikalien unerwünschte Nebenwirkungen verursachen. Zum Beispiel kann es zu Korrosion bei Anlagenkomponenten und anderen unerwünschten Reaktionen auch mit den behandelten Behältnissen kommen.

In der Vergangenheit wurden bereits Maßnahmen zur Verringerung des Chemikalieneinsatzes zur Stabilisierung einer fortwährend wiederverwendeten Behandlungsflüssigkeit einer Pasteurisierungsanlage vorgeschlagen. Vorwiegend wurden Maßnahmen zur Reinigung vorgeschlagen, welche primär auf die Entfernung von filtrierbaren und/oder absetzbaren, partikulären Stoffe abzielen. Solche Maßnahmen betreffen hauptsächlich eine Filtration von großkörnigen Stoffen, oder deren Abtrennung durch schwerkraftunterstützte Sedimentation, wie dies zum Beispiel in der EP 2 722 089 A1 beschrieben ist. Des Weiteren wurden auch Maßnahmen vorgeschlagen, mittels welchen auch fein- bis feinstkörnige Stoffe, inklusive Mikroorganismen aus einer im Kreislauf geführten Behandlungsflüssigkeit entfernbar sind. In dieser Hinsicht können zum Beispiel gute Ergebnisse mit den in der WO 2016/100996 A1 vorgeschlagenen Maßnahmen erzielt werden.

Auch in WO 2018/076034 A1 ist eine Pasteurisierungsanlage sowie ein Verfahren zum Betreiben einer Pasteurisierungsanlage mit Maßnahmen zur Reinigung einer im Kreis geführten Behandlungsflüssigkeit offenbart. In WO 2018/076034 A1 wird konkret vorgeschlagen, eine Teilmenge der in einem Umlaufkreislauf geführten Behandlungsflüssigkeit zu entnehmen und mittels Membranfiltration und Ionentausch zu reinigen. In WO 2018/076034 A1 ist weiters offenbart, mittels der eingesetzten Ionentauschvorrichtung den pH-Wert der Behandlungsflüssigkeit zu beeinflussen, wobei für die Behandlungsflüssigkeit ein pH-Wert zwischen 4 und 7 vorgeschlagen wird.

Dennoch besteht angesichts des Stands der Technik weiterhin Verbesserungsbedarf betreffend Pasteurisierungsvorrichtungen und Verfahren zu deren Betrieb hinsichtlich der Reinigung und Entkeimung einer ständig wiederverwendeten bzw. im Kreis geführten Behandlungsflüssigkeit.

Aufgabe der vorliegenden Erfindung war es, ein im Vergleich zum Stand der Technik verbessertes Verfahren zum Betreiben einer Pasteurisierungsvorrichtung sowie eine verbessere Pasteurisierungsvorrichtung zur Verfügung zu stellen, mittels derer eine effiziente Stabilisierung einer fortwährend wiederverwendeten Behandlungsflüssigkeit mit möglichst geringem Einsatz an Chemikalien erzielt werden kann, sodass ein fortwährender ununterbrochener Betrieb ohne Wartungs- bzw. Reinigungsunterbrechungen für einen möglichst langen Zeitraum ermöglicht ist.

Diese Aufgabe wird durch ein Verfahren gemäß den Ansprüchen gelöst.

Das Verfahren zum Betreiben einer Pasteurisierungsvorrichtung für die Pasteurisierung von in verschlossenen Behältnissen abgefüllten Lebensmitteln umfasst ein Transportieren von mit Lebensmittel befüllten und verschlossenen Behältnissen durch mehrere Behandlungszonen in einer Transportrichtung mittels eines Transportmittels. Die Lebensmittel werden in den Behandlungszonen durch Applizieren einer temperierten Behandlungsflüssigkeit auf eine Außenseite der Behältnisse behandelt. Hierbei wird jeder Behandlungszone über eine Zuleitung Behandlungsflüssigkeit mit einer bestimmten Temperatur zugeführt.

Dies derart, dass die Lebensmittel in den verschlossenen Behältnissen in Transportrichtung in wenigstens einer Aufwärmzone vorgewärmt, in Transportrichtung folgend in wenigstens einer Pasteurisierungszone auf Pasteurisierungstemperatur erhitzt und in Transportrichtung folgend in wenigstens einer Abkühlzone abgekühlt werden. Die Behandlungsflüssigkeit wird nach Applikation auf die Behältnisse in den Behandlungszonen gesammelt und gesammelte Behandlungsflüssigkeit zur Wiederverwendung über Umlaufkreislaufleitungen eines Umlaufkreislaufs zumindest einer Behandlungszone wieder zugeführt.

Des Weiteren wird mittels mindestens eines Flüssigkeits-Entnahmemittel aus der in dem Umlaufkreislauf zirkulierten Behandlungsflüssigkeit oder aus Behandlungsflüssigkeit in einer Behandlungszone fortwährend eine Teilmenge an Behandlungsflüssigkeit zur Bildung wenigstens eines Teilstromes der Behandlungsflüssigkeit entnommen. Dieser wenigstens eine Teilstrom wird über eine Zulaufleitung zumindest eines Bypass einer in dem zumindest einen Bypass angeordneten Membranfiltrationsvorrichtung zugeführt und filtriert. Anschließend wird der filtrierte Teilstrom wieder in den Umlaufkreislauf oder in eine Behandlungszone zurückgeführt. Der Bypass ist hierbei Bestandteil des Umlauflaufkreislaufes.

Außerdem werden der Behandlungsflüssigkeit Prozesschemikalien zugegeben.

Im Besonderen der Behandlungsflüssigkeit als Prozesschemikalie ein Biozid, ausgewählt aus einer Gruppe bestehend aus Hypochlorit, Peressigsäure, Chlordioxid und Bronopol oder eine Mischung von Bioziden ausgewählt aus dieser Gruppe zudosiert. Dies derart, dass eine Konzentration des Biozids oder eine Summenkonzentration an Bioziden 0,4 mmol/L nicht übersteigt. Außerdem wird der Behandlungsflüssigkeit als Prozesschemikalie ein pH-Regulierungsmittel umfassend zumindest eine anorganische oder organische Säure zudosiert, derart dass ein pH-Wert der Behandlungsflüssigkeit eingestellt wird auf einen Bereich von 3,5 bis 7,0.

Durch die angegebenen Maßnahmen kann ein effizientes Verfahren mit ausreichend guter Stabilisierung der Behandlungsflüssigkeit bereitgestellt werden. Insbesondere kann eine Bildung von sogenannten Biofilmen hintangehalten werden. Dies erstaunlicherweise trotz der geringen Konzentration an Biozid in der Behandlungsflüssigkeit. Gerade aufgrund der niedrigen Konzentration an Biozid in der Behandlungsflüssigkeit und durch die Wahl eines der angegebenen Biozide können aber auch unerwünschte Effekte, welche im Speziellen bei einer hohen Biozid-Konzentration auftreten können, hintangehalten werden. Dies betrifft unter anderem eine Korrosion von Anlagenteilen, oder auch Oberflächenreaktionen und damit einhergehende Verfärbungen an Anlagenteilen oder an den behandelten Behältnissen.

Ein pH-Wert der Behandlungsflüssigkeit in dem angegebenen Bereich hat sich vor allem als wirksam erwiesen, um Oberflächenreaktionen, beispielsweise an Oberflächen von Komponenten der Pasteurisierungsvorrichtung aber auch der behandelten Behältnisse, und damit einhergehenden Verfärbungen hintanzuhalten. Sowohl bei einem geringeren bzw. zu geringen, als auch bei einem höheren bzw. zu hohen pH-Wert der Behandlungsflüssigkeit kann eine verstärkte Neigung zur Bildung von Korrosionsschäden und Verfärbungen festgestellt werden. Vorzugsweise kann ein pH-Wert der Behandlungsflüssigkeit auf 4,0 bis 6,5 eingestellt werden.

Insgesamt kann durch die angegebenen Maßnahmen eine Verbesserung der Betriebseffizienz einer Pasteurisierungsvorrichtung erzielt werden. Im Besonderen kann ein langer ununterbrochener Betrieb einer Pasteurisierungsvorrichtung ermöglicht werden, wobei Unterbrechungen des regulären Pasteurisierungs-Betriebs wegen Wartungs- und/oder Reinigungsoperationen, beispielsweise aufgrund einer Bildung von Biofilmen bzw. allgemein Ablagerungen, wirksam hintangehalten werden können. Der Einsatz der Membranfiltration und Prozesschemikalien in geringer Konzentration hat sich hierbei als in synergistischer Weise wirksam erwiesen.

Bei dem Verfahren kann im Speziellen vorgesehen sein, dass die zu pasteurisierenden Lebensmittel in ein Metall, insbesondere Aluminium aufweisende Behältnisse abgefüllt sind, wie etwa Flaschen mit einem ein Metall umfassenden Verschluss, zum Beispiel einem Schraubverschluss, oder etwa die bekannten Aluminium-Getränkedosen. Gerade bei ein Metall aufweisenden Behältnissen kann es durch die Behandlung mit einer temperierten Behandlungsflüssigkeit zur Pasteurisierung der Lebensmittel in den Behältnissen aufgrund der andauernden Einwirkung der Behandlungsflüssigkeit auf die Behältnisse zu Verfärbungen an den Metall aufweisenden Stellen der Behältnisse kommen. Im Falle von Aluminiumdosen ist dies als sogenannte Brunnenwasserschwärze bekannt. Wie sich erwiesen hat, spielen hierbei die Parameter bzw. die Zusammensetzung der wässrigen Behandlungsflüssigkeit, wie etwa deren pH-Wert und Chemikaliengehalt eine tragende Rolle, und kann durch eine geringe Konzentration und geeignete Wahl an Prozesschemikalien einer Verfärbung von ein Metall, insbesondere Aluminium aufweisende Behältnissen entgegengewirkt bzw. eine solche Verfärbung durch die Behandlung mit der wässrigen Behandlungsflüssigkeit hintangehalten werden.

Insofern hier und in weiterer Folge von einer Konzentration einer Prozesschemikalie oder einer Summenkonzentration an Prozesschemikalien die Rede ist, ist hierunter eine Durchschnittskonzentration über die gesamte Behandlungsflüssigkeit zu verstehen. Wie einem Fachmann auf dem Gebiet unmittelbar klar ist, kann hierbei eine Konzentration einer Prozesschemikalie oder eine Summenkonzentration an Prozesschemikalien lokal begrenzt im Bereich einer Dosierstelle für die Prozesschemikalie(n) für die Zeitdauer einer Zudosierung und zeitlich begrenzt hiernach, drastisch höher sein als eine generelle Durchschnittskonzentration in der Behandlungsflüssigkeit. Derartige unvermeidbare Überschreitungen der angegebenen Konzentrationen bzw. Summenkonzentrationen sind von den angegebenen Werten der Konzentrationen bzw. Summenkonzentrationen daher natürlich ausgenommen. Im Speziellen ist hier und in weiterer Folge eine Konzentration einer Prozesschemikalie oder eine Summenkonzentration an Prozesschemikalien als dynamische Durchschnittskonzentration im Stundendurchschnitt über die gesamte Behandlungsflüssigkeit zu verstehen. Dies gilt hier und im Folgenden für alle auf eine Konzentration oder Summenkonzentration bezogenen Angaben, inklusive Angaben zum pH-Wert der Behandlungsflüssigkeit.

Bei einer bevorzugten Weiterbildung des Verfahrens kann vorgesehen sein, dass der Behandlungsflüssigkeit Chlordioxid als Biozid zudosiert wird.

Chlordioxid bietet als Biozid grundsätzlich einige Vorteile gegenüber alternativen Bioziden, wie etwa hohe Effizienz oder geringe Korrosionsneigung, und ist auch ein ökologisch sinnvolles Biozid. Erstaunlicherweise hat sich der Einsatz von Chlordioxid als Biozid bei dem angegebenen Pasteurisierungsverfahren mit Kreislaufführung einer Behandlungsflüssigkeit als sehr wirksam erwiesen. Dies einerseits trotz der zonenweise in den Behandlungszonen und dem Umlaufkreislauf sehr hohen Temperaturniveau der zirkulierten Behandlungsflüssigkeit, welche Temperaturen abschnittsweise deutlich höher sind als die Zersetzungstemperatur von Chlordioxid von ca. 45 °C.

Auch zeigt Chlordioxid überaschenderweise in der fortwährend im Umlaufkreislauf geführten Behandlungsflüssigkeit sehr gute biozide Wirkung. Dies trotz der hohen Zehrung für welche Chlordioxid an sich bekannt ist. Erstaunlicherweise scheint bei dem angegebenen Verfahren Chlordioxid in der Behandlungsflüssigkeit auch über ausreichend weite Transportstrecken in dem Umlaufkreislauf möglich zu sein, sodass die erwünschte biozide Wirkung zumindest an hinsichtlich der Bildung von Biofilmen empfindlichen Stellen der Pasteurisierungsvorrichtung erzielbar ist.

Ein Soll-Wert der Chlordioxid-Konzentration kann hierbei auch bedarfsabhängig, zum Beispiel in Abhängigkeit von dem Verschmutzungsgrad und/oder in Abhängigkeit zum Beispiel von einer ermittelten Keimzahl in der Behandlungsflüssigkeit variiert bzw. variabel vorgegeben werden.

Des Weiteren kann eine Verfahrungsführung angewandt werden, bei welcher Chlordioxid mittels einer Bereitstellungsvorrichtung in situ chemisch hergestellt und für Dosiervorrichtung(en) bereitgestellt wird.

Hierdurch kann die Bereitstellung von Chlordioxid für die Dosiervorrichtung(en) bedarfsabhängig erfolgen. Die Herstellung des Chlordioxids kann hierbei mittels an sich bekannter Methoden erfolgen, beispielsweise durch das Salzsäure-Chlorit-Verfahren oder das Persulfat-Chlorit-Verfahren bzw. Peroxodisulfat-Chlorit-Verfahren. Besonders bevorzugt wird als Chlordioxid-Bereitstellungsverfahren das sogenannte Einkomponenten-Feststoffverfahren angewandt, bei welchem die zur chemischen Herstellung von Chlordioxid benötigten Komponenten inert verpresst vorliegen, welche in Wasser gelöst werden können. Letzteres Bereitstellungsverfahren wird unter anderem aufgrund der höheren Langzeitstabilität des Produktes und der einfachen Handhabung bevorzugt.

Ganz grundsätzlich kann bei dem Verfahren aber auch vorgesehen sein, dass der Behandlungsflüssigkeit als Biozid eine Mischung aus Chlordioxid und Hypochlorit zudosiert wird.

Des Weiteren kann eine Verfahrensführung vorgesehen sein, bei welcher das Biozid einem Volumenstrom der Behandlungsflüssigkeit zudosiert wird, welcher Volumenstrom der Behandlungsflüssigkeit in einer strömungstechnisch zu einer Abkühlzone führenden Umlaufkreislaufleitung geführt wird.

Wie sich herausgestellt hat, ist gerade im Bereich der Abkühlzonen eine erhöhte Tendenz zur Bildung von Biofilmen feststellbar. Es hat sich erwiesen, dass eine Zudosierung eines Biozids im Bereich einer Abkühlzone besonders wirksam ist um eine Biofilmbildung hintanzuhalten. Dies auch, da eine Zehrung bzw. ein Verlust an Biozid aufgrund einer langen Transportstrecke zu einer Abkühlzone durch eine solche Maßnahme hintangehalten werden kann.

Es kann aber auch von Vorteil sein, das Biozid der Behandlungsflüssigkeit an mindestens einer in dem Umlaufkreislauf oder einer Behandlungszone angeordneten Dosierstelle zuzudosieren, an welcher Dosierstelle Behandlungsflüssigkeit (5) mit einer Temperatur von 20 °C bis 55 °C geführt wird.

Durch diese Maßnahme kann in erster Linie sichergestellt werden, dass in der Behandlungsflüssigkeit an besonders hinsichtlich Biofilmbildung anfälligen Dosierstellen bzw. -abschnitten, eine ausreichend hohe Konzentration an Biozid bereitgestellt und auch aufrechterhalten werden kann. Eine mögliche Problematik einer zu hohen Biozid-Zehrung in der Behandlungsflüssigkeit entlang langer Transportstrecken kann somit vermieden werden. Vorzugsweise kann der Behandlungsflüssigkeit an mindestens einer Dosierstelle oder mindestens einem Dosierabschnitt mittels wenigstens einer Dosiervorrichtung ein Biozid zudosiert werden, an welcher Dosierstelle oder an welchem Dosierabschnitt Behandlungsflüssigkeit mit einer Temperatur von 30 °C bis 45 °C geführt wird.

Weiter kann es zweckmäßig sein, wenn das Biozid der Behandlungsflüssigkeit an mindestens einer in dem zumindest einem Bypass strömungstechnisch folgend auf eine Membranfiltrationsvorrichtung angeordneten Dosierstelle zudosiert wird.

Dies stellt eine besonders wirksame Maßnahme für die Zudosierung von Biozid dar, da ein Biozid in eine unmittelbar vorgereinigte Behandlungsflüssigkeit mit sehr geringer oder praktisch keiner partikulären Verunreinigung beigemengt bzw. zudosiert wird. Dadurch kann wiederum eine Zehrung an Biozid sehr geringgehalten werden und kann ein guter Transport bzw. eine gute Verteilung eines Biozids in der gesamten, zirkulierten Behandlungsflüssigkeit bewerkstelligt werden.

Bei einer weiteren Ausführungsform es Verfahrens kann mindestens ein Ist-Wert der Biozid-Konzentration in der Behandlungsflüssigkeit an mindestens einer Messstelle mittels wenigstens einem Biozid-Konzentrationsmesssensor ermittelt werden, und kann eine Konzentration des Biozids in der Behandlungsflüssigkeit basierend auf dem an der mindestens einen Messstelle ermittelten Ist-Wert durch Zudosieren des Biozids an mindestens einer Dosierstelle mittels wenigstens einer Dosiervorrichtung hinsichtlich einem vorgebbaren Soll-Wert für die Konzentration des Biozids beeinflusst werden.

Hierbei kann im Speziellen vorgesehen sein, dass mindestens ein Ist-Wert der Biozid-Konzentration an mindestens einer in dem Umlaufkreislauf oder einer Behandlungszone angeordneten Messstelle ermittelt wird, an welcher Messstelle Behandlungsflüssigkeit mit einer Temperatur von 20 °C bis 55 °C geführt wird.

Die Überwachung der Biozid-Konzentration in der Behandlungsflüssigkeit an Messstellen bzw. Messabschnitten einer Pasteurisierungsvorrichtung mit dem angegebenen Bereich für ein Temperaturniveau der Behandlungsflüssigkeit ist vor allem daher vorteilhaft, weil an solchen Stellen Temperaturbedingungen in der Behandlungsflüssigkeit gegeben sind, welche ein Wachstum bzw. eine Vermehrung von Mikroorganismen grundsätzlich ermöglichen bzw. sogar begünstigen. Auch ist deshalb die Bildung von Biofilmen an solchen Stellen bzw. Abschnitten besonders wahrscheinlich. Vorzugsweise kann vorgesehen sein, dass mittels wenigstens einem Konzentrationssensor mindestens ein Ist-Wert der Biozid-Konzentration an mindesten einer Messstelle oder mindestens einem Messabschnitt ermittelt wird, an welcher Messstelle oder an welchem Messabschnitt Behandlungsflüssigkeit mit einer Temperatur von 30 °C bis 45 °C geführt wird.

Bei einer Weiterbildung des Verfahrens kann vorgesehen sein, dass der Behandlungsflüssigkeit ein pH-Regulierungsmittel umfassend wenigstens eine Säure ausgewählt aus einer Gruppe bestehend aus Schwefelsäure, Phosphorsäure, Ameisensäure, Essigsäure, Zitronensäure, Gluconsäure, Milchsäure, Glucoheptansäure oder eine Mischung von Säuren ausgewählt aus dieser Gruppe zudosiert wird.

Die genannten Säuren haben sich im Besonderen als geeignet erwiesen, Verfärbungen an ein Metall aufweisenden Behältnissen hintanzuhalten.

Des Weiteren kann es sinnvoll sein, wenn das pH-Regulierungsmittel der Behandlungsflüssigkeit an mindestens einer Dosierstelle zudosiert wird, an welcher Dosierstelle Behandlungsflüssigkeit mit einer Temperatur von 40 °C bis 90 °C geführt wird. Dies da an solchen Stellen mit hohem Temperaturniveau besonders korrosive Bedingungen vorliegen, und eine Kontrolle des pH-Wertes an diesen Stellen besonders zweckmäßig ist.

Bei einer weiteren Ausführungsform des Verfahrens kann vorgesehen sein, dass der Behandlungsflüssigkeit als Prozesschemikalie(n) wenigstens eine komplexbildende Säure ausgewählt aus einer Gruppe bestehend aus Gluconsäure, Milchsäure, Zitronensäure oder eine Mischung von Säuren ausgewählt aus dieser Gruppe zudosiert wird, derart dass eine Konzentration der wenigstens einen komplexbildenden Säure oder eine Summenkonzentration der zudosierten, komplexbildenden Säuren 2,2 mmol/L nicht übersteigt.

Die genannten, komplexbildenden Säuren sind hierbei geeignet, um Steinbildung wirksam hintanzuhalten. Durch die Limitierung auf eine maximale Konzentration einer Säure bzw. auf eine Summenkonzentration mehrerer dieser genannten Säuren auf 2,2 mmol/L können andererseits unerwünschte Nebenwirkungen hintangehalten werden.

In diesem Zusammenhang kann es weiter von Vorteil sein, wenn die wenigstens eine komplexbildende Säure der Behandlungsflüssigkeit an mindestens einer Dosierstelle zudosiert wird, an welcher Dosierstelle Behandlungsflüssigkeit mit einer Temperatur von 55 °C bis 95 °C geführt wird. Dies da hierdurch an solchen Stellen mit dem angegebenen Temperatumiveau-Bereich der Behandlungsflüssigkeit eine ausreichende Konzentration an komplexbildender Säure bzw. komplexbildenden Säuren bereitgestellt werden kann und dadurch insbesondere Steinbildung hintangehalten werden kann.

Bei einer Weiterbildung des Verfahrens kann der Behandlungsflüssigkeit als Prozesschemikalie(n) wenigstens eine komplexbildende Phosphonsäure ausgewählt aus einer Gruppe bestehend aus 1-Hydroxyethan-(1,1-diphosphonsäure), 3-Carboxy-3-phosphonoadipinsäure, Diet-hylentriaminpenta(methylenphosphonsäure), Amino-tris(methylenphosphonsäure), ), oder wenigstens ein Phosphonat einer aus dieser Gruppe ausgewählten Phosphonsäure, oder eine Mischung von Phosphonsäuren und/oder Phosphonaten ausgewählt aus dieser Gruppe zudosiert werden, derart dass eine Konzentraion der wenigstens einen komplexbildenden Phosphonsäure oder des wenigstens einen Phosphonats oder eine Summenkonzentration der zudosierten, komplexbildenden Phosphonsäuren und/oder Phosphonate 0,2 mmol/L nicht übersteigt.

Auch die genannten Phosphonate bzw. deren Mischungen sind grundsätzlich hinsichtlich eins Hintanhaltens von Korrosion und Steinbildung wirksam. Durch die Wahl des Phosphonats oder der Phosphonate aus der angegebenen Gruppe und durch die Limitierung auf eine Konzentration oder Summenkonzentration von 0,2 mmol/L können wiederum unerwünschte Nebenwirkungen durch überhöhte Konzentration an Prozesschemikalie(n) in der Behandlungsflüssigkeit hintangehalten werden.

Auch hierbei kann es zweckmäßig sein, wenn die wenigstens eine komplexbildende Phosphonsäure und/oder das wenigstens eine komplexbildende Phosphonat der Behandlungsflüssigkeit an mindestens einer Dosierstelle zudosiert wird, an welcher Dosierstelle Behandlungsflüssigkeit mit einer Temperatur von 55 °C bis 95 °C geführt wird.

Es kann aber auch vorgesehen sein, dass der Behandlungsflüssigkeit als Prozesschemikalie ein zweiwertiges Zinksalz zudosiert wird, derart, dass eine Konzentration des zweiwertigen Zink-Salzes 0,06 mmol/L nicht übersteigt.

Auch Zn²⁺-Salze haben sich vorrangig als Korrosionsinhibitoren wirksam erwiesen, und können der Behandlungsflüssigkeit grundsätzlich gemeinsam mit anderen Prozesschemikalien bzw. Korrosionsinhibitoren zudosiert werden.

Des Weiteren kann vorgesehen sein, dass der Behandlungsflüssigkeit als Prozesschemikalie eine oligomere oder polymere Substanz, ausgewählt aus einer Gruppe bestehend aus Polyphosphaten, wasserlöslichen Polyacrylaten und Copolymeren aus Maleinsäure und Acrylsäure, oder eine Mischung aus oligomeren oder polymeren Substanzen ausgewählt aus dieser Gruppe zudosiert wird, derart dass eine Konzentration der zudosierten oligomeren oder polymeren Substanz, oder eine Summenkonzentration der zudosierten oligomeren oder polymeren Substanzen 0,4 mg/L nicht übersteigt.

Diese oligomeren oder polymeren Substanzen haben sich vor allem hinsichtlich einem Hintanhalten von Steinbildung ebenfalls als wirksam erwiesen. Die betreffenden Oligomere bzw. Polymere können beispielsweise Molekulargewichte im Bereich von 4000 g/mol bis 15000 g/mol aufweisen.

Außerdem kann bei dem Verfahren von Vorteil sein, wenn der Behandlungsflüssigkeit als Prozesschemikalie ein Phosphorsäureester oder eine Mischung aus Phosphorsäureestern zudosiert wird, derart dass eine Konzentration des Phosphorsäureester oder eine Summenkonzentration der Phosphorsäureester 0,1 g/L nicht übersteigt.

Phosphorsäureester haben sich per se oder auch in Kombination mit anderen Prozesschemikalien wiederum als wirksame Korrosionsinhibitoren erwiesen.

Ganz grundsätzlich kann bei dem Verfahren das Zudosieren von Prozesschemikalien manuell, zum Beispiel durch Bedienpersonal erfolgen. In diesem Zusammenhang kann es auch von Vorteil sein, wenn eine Messung einer Konzentration eines in der Behandlungsflüssigkeit enthaltenen bzw. gelösten Stoffes oder einer Konzentration einer Prozesschemikalie durchgeführt wird. Auch eine solche Messung einer Konzentration kann manuell, beispielsweise durch Bedienpersonal der Pasteurisierungsvorrichtung 1 durchgeführt werden.

Vorzugsweise kann derart vorgegangen werden, dass mindestens ein Ist-Wert einer Konzentration wenigstens eines in der Behandlungsflüssigkeit enthaltenen, chemischen Stoffes und/oder zumindest einer zugegebenen Prozesschemikalie und/oder mindestens eines zugegebenen internen Standards an mindestens einer Messstelle mittels wenigstens eines Konzentrationsmesssensors ermittelt wird, und eine Konzentration des wenigstens einen enthaltenen, chemischen Stoffes und/oder der zumindest einen zugegebenen Prozesschemikalie basierend auf dem an der mindestens einen Messstelle mittels des wenigstens einen Konzentrationsmesssensor ermittelten Ist-Wert durch Zudosieren zumindest einer Prozesschemikalie und/oder der zumindest einen zugegebenen Prozesschemikalie an mindestens einer Dosierstelle mittels wenigstens einer Dosiervorrichtung hinsichtlich einem vorgebbaren Soll-Wert für die Konzentration des wenigstens einen in der Behandlungsflüssigkeit enthaltenen, chemischen Stoffes und/oder der zumindest einen zugegebenen Prozesschemikalie und/oder des mindestens einen zugegebenen internen Standards beeinflusst wird.

In anderen Worten ausgedrückt kann eine Konzentration des wenigstens einen in der Behandlungsflüssigkeit enthaltenen, chemischen Stoffes und/oder der zumindest einen zugegebenen Prozesschemikalie in der Behandlungsflüssigkeit hinsichtlich eines Soll-Werts für die Konzentration des wenigstens einen in der Behandlungsflüssigkeit enthaltenen, chemischen Stoffes und/oder der zumindest einen zugegebenen Prozesschemikalie und/oder des mindestens einen zugegebenen internen Standards durch Steuern einer Dosiermenge zumindest einer Prozesschemikalie und/oder der zumindest einen Prozesschemikalie pro Zeiteinheit mittels der wenigstens einen Dosiervorrichtung beeinflusst werden. Dabei kann die Dosiermenge einer Prozesschemikalie abhängig von einem ermittelten Ist-Wert einer Konzentration eines in der Behandlungsflüssigkeit enthaltenen, chemischen Stoffes und/oder abhängig von einem ermittelten Ist-Wert der Konzentration der Prozesschemikalie selbst und/oder indirekt abhängig von einem ermittelten Ist-Wert eines zugegeben internen Standards gesteuert werden. Es kann vorgesehen sein, dass durch Zudosieren einer Prozesschemikalie eine Konzentration dieser Prozesschemikalie selbst hinsichtlich eines Soll-Werts für die Konzentration dieser Prozesschemikalie beeinflusst wird. Alternativ oder zusätzlich kann durch Zudosieren einer Prozesschemikalie primär eine Konzentration eines oder mehrerer in der Behandlungsflüssigkeit enthaltenen, chemischen Stoffe(s) beeinflusst werden.

Unter einem in der Behandlungsflüssigkeit enthaltenen bzw. gelösten, chemischen Stoff wird ein chemischer Stoff verstanden, welcher per se in der wässrigen Behandlungsflüssigkeit enthalten ist und welcher nicht zugegeben wird. Solche in der Behandlungsflüssigkeit enthaltenen Stoffe werden insbesondere durch Zuführung von frischer Behandlungsflüssigkeit bzw. Frischwasser in eine Pasteurisierungsvorrichtung eingebracht. Als wichtige Beispiele seien an dieser Stelle H₃O⁺-Ionen bestimmend einen pH-Wert der Behandlungsflüssigkeit, und Alkali- und Erdalkali-Salze insbesondere Ca-Salze und Mg-Salze bestimmend eine Wasserhärte der wässrigen Behandlungsflüssigkeit genannt.

Unter dem Begriff Prozesschemikalie ist eine der Behandlungsflüssigkeit zudosierte Chemikalie zu verstehen, wobei durch Zudosieren einer jeweiligen Prozesschemikalie eine Konzentration der Prozesschemikalie selbst oder die Konzentration eines in der Behandlungsflüssigkeit enthaltenen, chemischen Stoffes beeinflusst wird. Im Falle der Zudosierung mehrerer Prozesschemikalien kann vorzugsweise vorgesehen sein, dass Prozesschemikalien ausgewählt werden, welche eine möglichst geringe Tendenz zu chemischen Reaktionen untereinander aufweisen. Dabei haben sich die obenstehend bereits angegebenen Prozesschemikalien als gut geeignet erwiesen. Durch Auswahl aus den oben genannten Prozesschemikalien kann ein Verlust an Prozesschemikalien bzw. in Absinken der Konzentration an Prozesschemikalien in der Behandlungsflüssigkeit hintangehalten werden.

Unter einem internen Standard ist wie an sich bekannt eine Substanz zu verstehen, welche in bekannter Konzentration bzw. Menge der Behandlungsflüssigkeit zugegeben wird, und deren Konzentration mittels entsprechenden, für die Erfassung eines solchen internen Standard geeigneten Konzentrationsmesssensoren genau und insbesondere auch mit niedriger Nachweisgrenze ermittelt werden kann. Ein interner Standard kann zum Beispiel durch einen Farbstoff, insbesondere einen Fluoreszenzfarbstoff gebildet sein. Als geeignete interne Standards seien Fluorescein, ein Rhodamin oder vorzugsweise 1,3,6,8 Pyrentetrasulfonsäure, Natriumsalz (PTSA) genannt.

Eine Zugabe eines internen Standards in die Behandlungsflüssigkeit kann hierbei grundsätzlich separat von der Zugabe von Prozesschemikalie(n) erfolgen. Vorzugsweise wird ein interner Standard der Behandlungsflüssigkeit jedoch gemeinsam mit zumindest einer Prozesschemikalie und insbesondere gemeinsam mit einer Prozesschemikalie, auf deren Konzentration durch die Ermittlung der Konzentration des internen Standards rückgeschlossen werden soll, beigemengt. Im Speziellen kann also eine Prozesschemikalie und ein interner Standard gemeinsam mittels einer Dosiervorrichtung der Behandlungsflüssigkeit zudosiert werden. Mittels eines solchen zugegebenen, internen Standards kann im Besonderen ein Verlust an Prozesschemikalie(n), zum Beispiel wie bereits obenstehend ausgeführt durch das Berieseln der Behältnisse bzw. durch Verdampfung der Behandlungsflüssigkeit, insbesondere in einer Pasteurisierungszone und durch Ersetzen mit frischer Behandlungsflüssigkeit, erfasst werden.

Eine Bestimmung bzw. Ermittlung eines Ist-Wertes der Konzentration eines in bekannter Konzentraion der Behandlungsflüssigkeit zugegebenen bzw. zudosierten, internen Standards, kann ganz grundsätzlich natürlich als Basis zum Vorgeben von Soll-Werten für alle zugegebenen bzw. zudosierten Prozesschemikalien herangezogen werden. In diesem Falle kann ein Verlust bzw. ein Absinken der Konzentration von Prozesschemikalien durch andere Effekte als dem Verlust an Behandlungsflüssigkeit selbst, nicht direkt erfasst werden. Solche anderen Verluste an Prozesschemikalien können beispielsweise aufgrund chemischer Reaktionen der Prozesschemikalien mit in der Behandlungsflüssigkeit enthaltenen bzw. gelösten, chemischen Stoffen oder auch untereinander, oder im Falle eines zudosierten Biozids zum Beispiel durch Abtötung von Mikroorganismen verursacht sein. Daher kann im Falle der Ermittlung einer Konzentration eines zugegebenen bzw. zudosierten, internen Standards als Basis für die Zudosierung von zumindest einer Prozesschemikalie vorgesehen sein, dass ein Soll-Wert für die Konzentration zumindest einer Prozesschemikalie basierend auf dem ermittelten Ist-Wert der Konzentration des internen Standards mittels eines Korrekturfaktors erhöht wird, und die Zudosierung der zumindest einen Prozesschemikalie hinsichtlich diesem mittels eines Korrekturfaktors erhöhtem, vorgegebenen Soll-Wert für die Prozesschemikalie erfolgt. Unter der Erhöhung des Soll-Wertes für eine Konzentration zumindest einer Prozesschemikalie ist hierbei zu verstehen, dass eine solche Erhöhung bzw. der Korrekturfaktor eine Korrektur gegenüber dem Soll-Wert, welcher sich rechnerisch aus dem tatsächlich ermittelten Ist-Wert der Konzentration des internen Standards ergeben würde. Anders ausgedrückt kann bei einer Ermittlung eines Ist-Wertes einer Konzentration eines internen Standards als Basis für die Vorgabe eines Soll-Wertes vorgesehen sein, dass zumindest eine Prozesschemikalie auf Grund der Überhöhung bzw. des Korrekturfaktors für den Soll-Wert entsprechend in höherer Menge zudosiert wird, als sich aus dem tatsächlich ermittelten Ist-Wert der Konzentration des internen Standards ergeben würde.

Unabhängig davon kann ganz grundsätzlich als Messbasis bzw. Messreferenz für die Steuerung der mengenvariablen Zudosierung der Prozesschemikalie(n) der wenigstens eine mittels des wenigstens einen Konzentrationsmesssensors ermittelte Ist-Wert einer Konzentration dienen. Bei einer Ermittlung eines niedrigeren Ist-Werts einer Konzentration eine Prozesschemikalie und/oder eines in der Behandlungsflüssigkeit enthaltenen, chemischen Stoffes und/oder eines zugegebenen, internen Standards als dem entsprechenden vorgegebenen Soll-Wert der Konzentration kann die Dosiermenge, also die pro Zeiteinheit der Behandlungsflüssigkeit zudosierte Menge an Prozesschemikalie(n) erhöht werden. Umgekehrt kann bei Ermittlung eines Ist-Wertes, welcher größer als ein entsprechender vorgegebener Soll-Wert der Konzentration ist, die Dosiermenge an Prozesschemikalie(n) pro Zeiteinheit reduziert werden, oder zumindest zeitweilig gänzlich gestoppt werden. Die Prozesschemikalie(n) können zum Beispiel durch Zuführung bzw. volumetrische Zudosierung einer konzentrierten, wässrigen Lösung der Prozesschemikalie(n) in die Behandlungsflüssigkeit erfolgen. Eine Ermittlung bzw. Festlegung der zum Erzielen eines vorgegebenen Soll-Wertes erforderliche(n) Dosiermenge(n) an der oder den Prozesschemikalie(n) kann in an sich bekannter Weise für jede zudosierte Prozesschemikalie anhand stöchiometrischer Berechnungen und/oder zum Beispiel vorab experimentell durch Labor-Versuche oder Versuche an einer Pasteurisierungsvorrichtung vorgenommen werden.

Alle zur Steuerung der Zudosierung von der oder den Prozesschemikalie(n) erforderlichen Rechenoperationen können in an sich bekannter Weise in einer Steuerungsvorrichtung bzw. einem computerimplementierten Programm einer Steuerungsvorrichtung abgebildet sein. Eine solche Steuerungsvorrichtung kann hierfür mit dem wenigstens einen Konzentrationsmesssensor und zwecks Ansteuerung mit der wenigstens einen Dosiervorrichtung signalverbunden sein. Eine Steuerung einer Dosiermenge an Prozesschemikalie(n) kann wie an sich bekannt zum Beispiel mittels eines ansteuerbaren Dosierventils erfolgen. Ganz grundsätzlich kann wie bereits erwähnt aber auch eine manuelle Regelung der Dosiermengen einer oder mehrerer Prozesschemikalie(n) erfolgen.

Unter anderem in Abhängigkeit von der Größe und Ausgestaltung einer Pasteurisierungsvorrichtung kann es grundsätzlich ausreichend sein, wenn an nur einer Messstelle bzw. einem Messabschnitt ein Ist-Wert für die Konzentration des wenigstens einen in der Behandlungsflüssigkeit enthaltenen, chemischen Stoffes und/oder der zumindest einen zugegebenen Prozesschemikalie und/oder des mindestens einen zugegebenen internen Standards ermittelt wird. Genauso kann es ganz grundsätzlich sinnvoll und ausreichend sein, wenn die zumindest eine Prozesschemikalie an nur einer Dosierstelle bzw. einem Dosierabschnitt der Behandlungsflüssigkeit zudosiert wird. Es kann aber auch zweckmäßig sein, mehrere Ist-Werte der Konzentration des wenigstens einen in der Behandlungsflüssigkeit enthaltenen, chemischen Stoffes und/oder der zumindest einen zugegebenen Prozesschemikalie und/oder des mindestens einen zugegebenen internen Standards an mehreren Messstellen bzw. mehreren Messabschnitten zu ermitteln, wobei die ermittelten Ist-Werte naturgemäß selbstverständlich auch unterschiedlich sein können. Beispielsweise kann vorgesehen sein, dass mindestens ein Ist-Wert der Konzentration des wenigstens einen in der Behandlungsflüssigkeit enthaltenen, chemischen Stoffes und/oder der zumindest einen zugegebenen Prozesschemikalie und/oder des mindestens einen zugegebenen internen Standards an mindestens einer in dem Umlaufkreislauf oder einer Behandlungszone angeordneten Messstelle ermittelt wird. Es kann aber auch sinnvoll sein, dass mindestens ein Ist-Wert der Konzentration des wenigstens einen in der Behandlungsflüssigkeit enthaltenen, chemischen Stoffes und/oder der zumindest einen zugegebenen Prozesschemikalie und/oder des mindestens einen zugegebenen internen Standards an mindestens einer in einer Zuleitung für frische Behandlungsflüssigkeit angeordneten Messstelle ermittelt wird.

Natürlich kann es genauso auch sinnvoll sein, der Behandlungsflüssigkeit die zumindest eine Prozesschemikalie mittels einer oder mehrerer Dosiervorrichtung(en) an mehreren Dosierstellen bzw. Dosierabschnitten zuzudosieren. Grundsätzlich kann zum Beispiel vorgesehen sein, dass zumindest eine Prozesschemikalie an mindestens einer in dem Umlaufkreislauf oder einer Behandlungszone angeordneten Dosierstelle mittels wenigstens einer Dosiervorrichtung zudosiert wird. Es kann aber auch zweckdienlich sein, dass zumindest eine Prozesschemikalie der Behandlungsflüssigkeit an mindestens einer an mindestens einer in einer Zuleitung für frische Behandlungsflüssigkeit angeordneten Dosierstelle zudosiert wird.

Ganz grundsätzlich kann eine Vorgabe eines oder mehrerer Soll-Werte(s) für eine Konzentration des wenigstens einen in der Behandlungsflüssigkeit enthaltenen, chemischen Stoffes und/oder zumindest einer zugegebenen Prozesschemikalie und/oder des mindestens einen zugegebenen internen Standards basierend auf einem oder mehreren Ist-Wert(en) natürlich variabel erfolgen. Weiters ist es durchaus auch möglich, für unterschiedliche Messstellen bzw. Messabschnitte unterschiedliche Soll-Werte für die Konzentration des wenigstens einen in der Behandlungsflüssigkeit enthaltenen, chemischen Stoffes und/oder zumindest einer zugegebenen Prozesschemikalie und/oder des mindestens einen zugegebenen internen Standards vorzugeben. Dies vor allem hinsichtlich der zonenweise in einer Pasteurisierungsvorrichtung sehr unterschiedlichen Parameter, insbesondere unterschiedlichen Temperaturen der Behandlungsflüssigkeit. Beispiele für vorteilhafte Verfahrensführungen werden im Folgenden noch näher beschrieben.

Selbstverständlich können der Behandlungsflüssigkeit auch mehrere Prozesschemikalien an mehreren Dosierstellen zudosiert werden, und können mehrere Ist-Werte von Konzentrationen mehrerer in der Behandlungsflüssigkeit enthaltener chemischer Stoffe und/oder mehrerer Prozesschemikalien ermittelt werden. Folgend können basierend auf einem jeweilig ermittelten Ist-Wert eine gesteuerte Zudosierung von mehreren Prozesschemikalien erfolgen.

Ganz grundsätzlich kann des Weiteren eine Prozesschemikalie mehrere chemische Substanzen bzw. Komponenten umfassen, und können einzelne Substanzen von Prozesschemikalien auch hinsichtlich mehrerer Effekte zweckdienlich sein.

Durch die Ermittlung mindestens eines Ist-Wertes einer Konzentration kann die Zudosierung der Prozesschemikalie(n) gezielt derart erfolgen, dass eine verbesserte Stabilisierung auch mit möglichst geringer Menge an zudosierter Prozesschemikalie bzw. zudosierten Prozesschemikalien ermöglicht wird. Außerdem kann durch die angegebenen Maßnahmen eine unerwünschte und nachteilige Überdosierung von Prozesschemikalien hintangehalten werden.

So kann es vorteilhaft sein, wenn mittels wenigstens eines pH-Messsensors zumindest ein Ist-Wert eines pH-Wertes der Behandlungsflüssigkeit an mindestens einer Messstelle ermittelt wird. In weiterer Folge kann dann ein gezieltes Zudosieren des pH-Regulierungsmittel in der erfoderlichen Dosiermenge hinsichtlich eines vorgebbaren Soll-Wertes für den pH-Wert der Behandlungsflüssigkeit erfolgen.

Im Besonderen kann es in diesem Zusammenhang zweckmäßig sein, dass der zumindest eine Ist-Wert eines pH-Wertes der Behandlungsflüssigkeit (5) an mindestens einer Messstelle (35) ermittelt wird, an welcher Messstelle (35) Behandlungsflüssigkeit mit einer Temperatur von 55 °C bis 95 °C geführt wird.

Des Weiteren kann vorgesehen sein, dass mittels wenigstens eines Ca²⁺- und/oder Mg²⁺-Messsensors ein Ist-Wert einer Wasserhärte der Behandlungsflüssigkeit an mindestens einer Messstelle ermittelt wird. Sodann kann ein gezieltes Zudosieren von Prozesschemikalien, welche als Steinverhütungsmittel wirksam sind, wie zum Beispiel komplexbildende Säuren oder Phosphonate, wiederum gezielt in einer geeigneten Menge erfolgen. Sensoren zum Ermitteln einer Ca²⁺- und/oder Mg²⁺-Konzentration können insbesondere ionenselektive Elektroden umfassen.

Im Speziellen kann es hierbei von sinnvoll sein, wenn mittels wenigstens eines Ca²⁺- und/oder Mg²⁺-Messsensors ein Ist-Wert einer Wasserhärte der Behandlungsflüssigkeit an mindestens einer in einer Zuleitung für frische Behandlungsflüssigkeit angeordneten Messstelle ermittelt wird.

Es kann aber auch vorgesehen sein, dass an mindestens einer in einer Zuleitung für frische Behandlungsflüssigkeit angeordneten Messstelle ein Ist-Wert einer Leitfähigkeit von zugeführter, frischer Behandlungsflüssigkeit ermittelt wird. In weiterer Folge kann sodann zumindest teilweise oder überwiegend basierend auf der ermittelten Leitfähigkeit der zugeführten, frischen Behandlungsflüssigkeit ein Soll-Wert für die Konzentration zumindest einer Prozesschemikalie vorgegeben werden, und/oder kann eine Dosiermenge zumindest einer Prozesschemikalie hinsichtlich einem vorgebbaren Soll-Wert für die Konzentration eines oder mehrerer in der Behandlungsflüssigkeit enthaltenen chemischen Stoffe(s) angepasst werden.

Grundsätzlich kann die Leitfähigkeit der frischen Behandlungsflüssigkeit manuell durch Probenentnahme an der Messstelle und anschließende Labor-Messung ermittelt werden. Vorzugsweise kann vorgesehen sein, dass die Leitfähigkeit mittels einem Konzentrationsmesssensor, welcher als Leitfähigkeitssensor ausgebildet ist, ermittelt wird. Die Ermittlung der Leitfähigkeit der frischen Behandlungsflüssigkeit steht hierbei repräsentativ für die Summenkonzentration an gelösten Ionen in der frisch zugeführten Behandlungsflüssigkeit. Durch die angegebenen Maßnahmen kann im Besonderen auf eine wechselnde Qualität bzw. Zusammensetzung der zugeführten, frischen Behandlungsflüssigkeit reagiert werden. In weiterer Folge kann durch diese Maßnahmen die Zudosierung der Prozesschemikalie(n) gezielt und zumindest teilweise oder sogar überwiegend in Abhängigkeit von der zugeführten frischen Behandlungsflüssigkeit bzw. der darin enthaltenen bzw. gelösten, chemischen bzw. ionischen Stoffe erfolgen.

Ganz allgemein kann vorgesehen sein, dass ein erster Ist-Wert und ein zweiter Ist-Wert der Konzentration wenigstens eines enthaltenen, chemischen Stoffes und/oder zumindest einer zugegebenen Prozesschemikalie und/oder mindestens eines zugegebenen internen Standards in der Behandlungsflüssigkeit an mindesten zwei voneinander beabstandeten Messstellen mittels eines ersten Konzentrationsmesssensor und mittels eines zweiten Konzentrationsmesssensors ermittelt wird, und eine Konzentration des wenigstens einen enthaltenen, chemischen Stoffes und/oder zumindest einer zugegebenen Prozesschemikalie basierend auf dem mittels des ersten Konzentrationsmesssensors ermitteln Ist-Wert und/oder basierend auf dem mittels des zweiten Konzentrationsmesssensors ermittelten Ist-Wert hinsichtlich einem vorgebbaren Soll-Wert für die Konzentration des wenigstens einen in der Behandlungsflüssigkeit enthaltenen, chemischen Stoffes und/oder zumindest einer zugegebenen Prozesschemikalie und/oder des mindestens einen zugegebenen internen Standards beeinflusst wird.

Diese Maßnahme hat sich besonders vorteilhaft bei großen Pasteurisierungsvorrichtungen mit hoher Pasteurisierungskapazität und langen Transportstrecken der Behandlungsflüssigkeit erwiesen. Im Speziellen kann durch diese angegebenen Maßnahmen eine Abnahme der Konzentration eines in der Behandlungsflüssigkeit enthaltenen Stoffes und/oder einer Prozesschemikalie und/oder eines internen Standards entlang weiter Transportstrecken effizient überwacht, und im Bedarfsfall die Zudosierung der Prozesschemikalie(n) entsprechend angepasst werden. Hierbei können mehrere ermittelte Ist-Werte oder kann jeweils nur einer der ermittelten Ist-Werte zur Steuerung der Zudosierung der Prozesschemikalie(n) herangezogen werden.

Es kann zum Beispiel vorgesehen sein, dass der erste Ist-Wert mittels einem einer Dosiervorrichtung bezogen auf eine Strömungsrichtung der Behandlungsflüssigkeit stromaufwärts benachbart angeordneten, ersten Konzentrationsmesssensor ermittelt wird, und der zweite Ist-Wert mittels einem bezogen auf eine Strömungsrichtung der Behandlungsflüssigkeit stromaufwärts vom ersten Konzentrationsmesssensor mindestens 5 Meter beabstandet angeordneten zweiten Konzentrationsmesssensor ermittelt wird.

Eine Zudosierung einer oder mehrerer Prozesschemikalie(n) kann hiernach beispielsweise basierend auf einer Gewichtung der beiden ermittelten Ist-Werte durchgeführt werden. Beispielsweise kann der mittels des zweiten Sensors ermittelte Ist-Wert an einer Messstelle mit hoher Anfälligkeit der Pasteurisierungsvorrichtung für Biofilm-Bildung oder Korrosion ermittelt werden. In einem solchen Fall kann diesem zweiten Ist-Wert eine Gewichtung von zum Beispiel 90 % zugewiesen werden, und der mittels des ersten Sensors ermittelten Ist-Wert beispielsweise nur mit 10 % gewichtet werden.

Bei einer Weiterbildung des Verfahrens kann auch vorgesehen sein, dass bei einer detektierten Überschreitung eines vorgegebenen Soll-Werts der Konzentration einer zudosierten Prozesschemikalie, insbesondere eines zudosierten Biozids mittels einer mit den Behandlungszonen wirkverbundenen Absaugvorrichtung Gasatmosphäre aus den Behandlungszonen abgesaugt wird. Dies kann im Speziellen zur Verhinderung eines Austritts von Biozid aus der Pasteurisierungsvorrichtung in die Umgebung, insbesondere im Falle von gegenüber der Umgebungsluft nicht vollständig abgetrennter Behandlungszonen sinnvoll sein. Diese Maßnahme kann im Speziellen bei einem Störfall zweckmäßig sein, bei welchem keine Zirkulation der Behandlungsflüssigkeit in dem Umlaufkreislauf stattfindet.

Zum besseren Verständnis der Erfindung wird diese anhand der nachfolgenden Figur näher erläutert.

Es zeigt in stark vereinfachter, schematischer Darstellung:

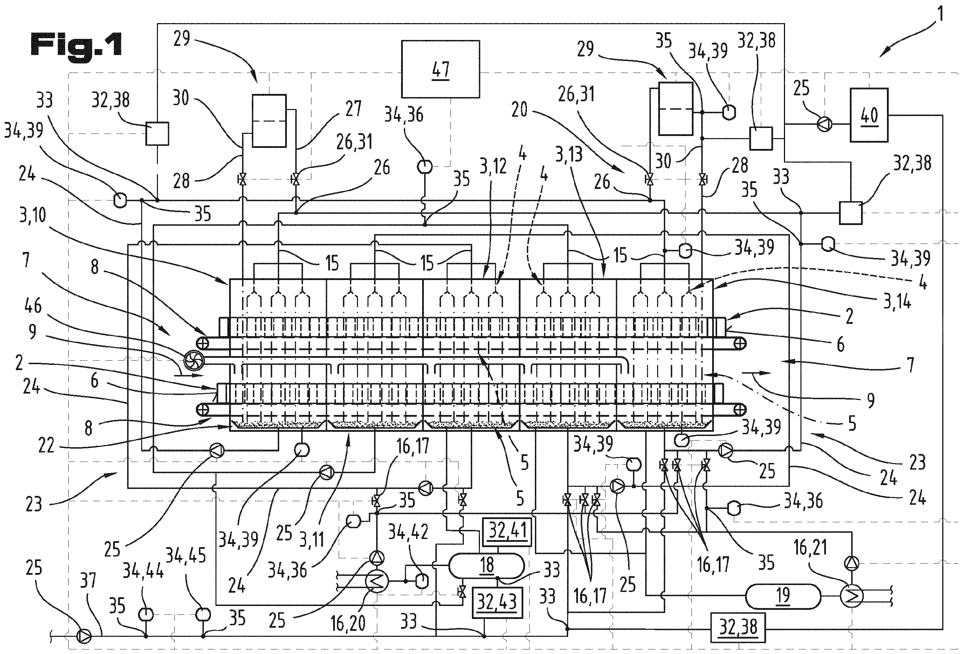

- Fig. 1: Eine schematische Darstellung eines Ausführungsbeispiels einer Pasteurisierungsanlage.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

In der Fig. 1 ist ein Ausführungsbeispiel für eine Pasteurisierungsvorrichtung 1 für die Pasteurisierung von in verschlossenen Behältnissen 2 abgefüllten Lebensmitteln schematisch dargestellt. Die Pasteurisierungsvorrichtung 1 umfasst mehrere Behandlungszonen 3 mit Berieselungsmitteln 4 zur Applikation einer Behandlungsflüssigkeit 5 auf eine Außenseite 6 der verschlossenen Behältnisse 6. In dem Ausführungsbeispiel gemäß der Fig. 1 sind rein beispielhaft und aus Gründen besserer Übersichtlichkeit lediglich fünf Behandlungszonen 3 dargestellt, wobei es sich von selbst versteht, dass je nach Anforderung und Auslegung einer Pasteurisierungsvorrichtung 1 auch weniger oder mehr Behandlungszonen 3 vorgesehen sein können. So sind Pasteurisierungsvorrichtungen mit 10, 15 oder mehr Behandlungszonen 3 durchaus üblich.

Im Betrieb der Pasteurisierungsvorrichtung 1 wird eine Pasteurisierung von Lebensmitteln derart durchgeführt, dass die Lebensmittel vorab in die Behältnisse 2 gefüllt werden, und die Behältnisse 2 verschlossen werden. Ein Behandeln der mit Lebensmitteln befüllten und verschlossenen Behältnisse 2 wird in einer jeweiligen Behandlungszone 3 durch Applizieren einer wässrigen Behandlungsflüssigkeit 5 auf eine Außenseite 6 der Behältnisse 2 via die Berieselungsmittel 4 durchgeführt. Die Berieselungsmittel 4 einer jeweiligen Behandlungszone 3 können zum Beispiel durch sprinkler- oder düsenartige Berieselungsmittel bzw. allgemein durch Mittel zum Verteilen der Behandlungsflüssigkeit in einer jeweiligen Behandlungszone 3 gebildet sein. Die temperierte, wässrige Behandlungsflüssigkeit 5 wird auf diese Weise auf die Außenseite 6 der Behältnisse 2 appliziert, wodurch die Behältnisse 2 und somit die in den Behältnissen 2 abgefüllten Lebensmittel gezielt temperiert und pasteurisiert werden können. Die Behältnisse 2 können beispielsweise durch Flaschen, Dosen oder anderen Gebinde gebildet sein, und grundsätzlich aus diversen Materialien aufgebaut, und gegebenenfalls beschichtet oder bedruckt sein. Bei dem Verfahren kann insbesondere vorgesehen sein, dass die zu pasteurisierenden Lebensmittel in ein Metall, insbesondere Aluminium aufweisende Behältnisse 2 abgefüllt sind, wie etwa Flaschen mit einem ein Metall umfassenden Verschluss. Im Speziellen können die Behältnisse 2 durch Aluminium-Getränkedosen 2 gebildet sein, wie dies auch in der Fig. 1 angedeutet ist.

Zum Transportieren der Behältnisse 2 durch die Behandlungszonen 3 ist ein Transportmittel 7 vorgesehen. Bei dem in der Fig. 1 dargestellten Ausführungsbeispiel umfasst das Transportmittel 7 zwei angetriebene Förderbänder 8, womit die mit Lebensmitteln befüllten und verschlossenen Behältnisse 2 im Betrieb der Pasteurisierungsvorrichtung 1 in zwei Ebenen durch die Behandlungszonen 3 transportiert werden. Dies kann in einer, in der Fig.1 mit den Pfeilen veranschaulichten, Transportrichtung 9, zum Beispiel von links nach rechts erfolgen.

Im Betrieb einer Pasteurisierungsvorrichtung 1 kann zum Beispiel vorgesehen sein, dass die Lebensmittel in den Behältnissen 2 in einer Behandlungszone 3 oder mehreren Behandlungszonen 3 zunächst erwärmt, in Transportrichtung 8 folgend in einer oder mehreren Behandlungszonen 3 auf Pasteurisierungstemperatur erhitzt und gehalten, und anschließend in Transportrichtung 9 folgend in einer oder mehreren Behandlungszonen 3 gezielt abgekühlt werden.

Bei dem in der Fig. 1 dargestellten Ausführungsbeispiel einer Pasteurisierungsvorrichtung 1 sind beispielhaft in Transportrichtung 9 gesehen zunächst zwei als Aufwärmzonen 10, 11 ausgebildete Behandlungszonen 3 vorgesehen, in welchen die Lebensmittel bzw. Behältnisse 2 im Betrieb der Vorrichtung 1 zunächst sukzessive vorgewärmt werden. Bei dem dargestellten Ausführungsbeispiel ist zur Pasteurisierung der Lebensmittel in Transportrichtung 9 auf die Aufwärmzonen 10, 11 eine Pasteurisierungszone 12 vorgesehen. In dieser Behandlungs- bzw. Pasteurisierungszone 3, 12 werden die Lebensmittel durch Zuführen einer zur Pasteurisierung geeignet temperierten Behandlungsflüssigkeit 5 und Berieselung auf die Außenseite 6 der Behältnisse 2 pasteurisiert. Darauf in Transportrichtung 9 folgend sind bei dem Ausführungsbeispiel in Fig. 1 zwei als Abkühlzonen 13, 14 ausgebildete Behandlungszonen 3 vorgesehen, in welchen Abkühlzonen 13, 14 die Lebensmittel bzw. die Behältnisse im Betrieb der Pasteurisierungsvorrichtung 1 durch Zufuhr einer Behandlungsflüssigkeit 5 mit jeweils zum Abkühlen der Behältnisse 6 geeigneter Temperatur sukzessiv abgekühlt werden.

Wie aus Fig. 1 ersichtlich umfasst die Pasteurisierungsvorrichtung 1 für jede Behandlungszone 3 eine Zuleitung 15 für jede Behandlungszone 3 zur Zuleitung eines temperierten Volumenstroms der Behandlungsflüssigkeit zu einem jeweiligen Berieselungsmittel 4. Des Weiteren umfasst die Pasteurisierungsvorrichtung 1 Temperierungsmittel 16 zum Temperieren der Behandlungsflüssigkeit 5 bzw. zum Temperieren einzelner den Behandlungszonen 3 zugeführten Volumenströmen der Behandlungsflüssigkeit 5. Bei dem in der Fig. 1 dargestellten Ausführungsbeispiel sind zum Beispiel Ventile 17, insbesondere Durchflussregelventile als Temperierungsmittel 16 vorgesehen, über welche einigen einer Behandlungszone 3 zugeführten Volumenströmen der Behandlungsflüssigkeit 5 zum Temperieren jeweils heiße Behandlungsflüssigkeit aus einem Warmwassertank 18 oder kühle Behandlungsflüssigkeit aus einem Kaltwassertank 19 beigemengt werden kann. Zum Erwärmen bzw. Erhitzen der Behandlungsflüssigkeit kann außerdem wie in Fig. 1 dargestellt als generelles Temperierungsmittel 16 ein Heizmittel 20, zum Beispiel ein Wärmetauscher wie etwa ein Heißdampfwärmetauscher vorgesehen sein. Zum generellen Abkühlen der Behandlungsflüssigkeit 5 kann genauso ein Kühlmittel 21, beispielsweise ein Kaltwasserwärmetauscher vorgesehen sein. Im Betrieb der Pasteurisierungsvorrichtung 1 kann mittels solcher Temperierungsmittel 16 jeder Behandlungszone 3 über die jeweilige Zuleitung 15 Behandlungsflüssigkeit 5 mit einer bestimmten Temperatur zugeführt werden.

Im Betrieb der als Ausführungsbeispiel in Fig. 1 dargestellten Pasteurisierungsvorrichtung 1 kann der in Transportrichtung 9 zuerst angeordneten Aufwärmzone 10 zum Beispiel Behandlungsflüssigkeit 5 mit einer Temperatur von 25 °C bis 45 °C zugeführt werden. Der in Transportrichtung 9 folgenden Aufwärmzone 11 kann zum Beispiel Behandlungsflüssigkeit 5 mit einem Temperaturniveau von 45 °C bis 65 °C zugeführt werden. Der Pasteurisierungszone 12 kann Behandlungsflüssigkeit 5 mit einer Temperatur von 65 °C bis 95 °C zugeführt werden. Der in Transportrichtung 9 nach der Pasteurisierungszone 12 angeordneten Abkühlzone 13 kann zum Beispiel Behandlungsflüssigkeit mit einer Temperatur von 40 bis 60 °C und der hierauf in Transportrichtung 9 folgend angeordneten Abkühlzone 14 Behandlungsflüssigkeit mit einem Temperaturniveau von 25 bis 40 °C zugeführt werden. In Abhängigkeit von unterschiedlichen Ausgestaltungsformen einer Pasteurisierungsvorrichtung wie etwa der Anzahl an Behandlungszonen, oder auch abhängig von der Art eines Lebensmittels bzw. dessen Erfordernissen können natürlich auch andere Temperaturen für die Behandlungszonen 3 gewählt werden.

Die in Fig. 1 dargestellte Pasteurisierungsvorrichtung 1 umfasst zum Sammeln der Behandlungsflüssigkeit 5 nach deren Applizieren auf die Behältnisse 2 Sammelelemente 22 in jeder Behandlungszone 3, wie etwa in einem unterem Bodenbereich der Behandlungszonen 3 angeordnete Sammelwannen. Des Weiteren ist zur Wiederverwendung der Behandlungsflüssigkeit 5 durch Rückführung der gesammelten Behandlungsflüssigkeit 5 in die Behandlungszonen 3 ein Umlaufkreislauf 23 mit Umlaufkreislaufleitungen 24 und Fördermitteln 25. Die Umlaufkreislaufleitungen 24 können durch Rohre und die Fördermittel 25 durch Förderpumpen gebildet sein. Im Betrieb der Pasteurisierungsvorrichtung 1 wird hiermit die Behandlungsflüssigkeit 5 nach Applikation auf die Behältnisse 2 in den Behandlungszonen 3 gesammelt, und die gesammelte Behandlungsflüssigkeit 5 zur Wiederverwendung über die Umlaufkreislaufleitungen 24 des Umlaufkreislaufs 23 zumindest einer Behandlungszone 5 wieder zugeführt.

Bei dem in der Fig. 1 dargestellten Ausführungsbeispiel ist der Umlaufkreislauf 23 derart ausgestaltet, dass die Behandlungsflüssigkeit der Pasteurisierungszone 12 im Kreis wieder in die Pasteurisierungszone 12 zurückführbar ist. Die in den Abkühlzonen 13 respektive 14 gesammelte Behandlungsflüssigkeit 5 kann im Betrieb der Pasteurisierungsvorrichtung 1 über Umlaufkreislaufleitungen 24 bzw. Rekuperationsleitungen den Aufwärmzonen 11 respektive 10 zugeführt werden. Umgekehrt kann wie aus Fig. 1 ersichtlich die in den Aufwärmzonen 10 respektive 11 gesammelte Behandlungsflüssigkeit über Umlaufkreislaufleitungen 24 bzw. Rekuperationsleitungen den Abkühlzonen 14 respektive 13 zugeführt werden. Vorteilhaft ist hierbei, dass aufgrund der Abkühlung der Behandlungsflüssigkeit 5 durch das Vorwärmen der Behältnisse 2 in den Aufwärmzonen 11, 12 die gesammelte Behandlungsflüssigkeit 5 jeweils ein für die Abkühlzonen 13 bzw. 14 geeignetes Temperaturniveau aufweist. Umgekehrt gilt dies auch für die durch das Abkühlen in den Abkühlzonen 13 respektive 14 erwärmte Behandlungsflüssigkeit 5 hinsichtlich der Zonen 12 respektive 11. Teilmengen der in den Behandlungszonen 3 gesammelten Behandlungsflüssigkeit 5 können aber auch den Wassertanks 18, 19 zugeführt werden, und durch Behandlungsflüssigkeit aus diesen Wassertanks 18, 19 ersetzt werden. Dies kann insbesondere zur Beeinflussung einer jeweiligen Temperatur der Behandlungsflüssigkeit 5 für die Zuleitung in die Behandlungszonen 3 via die Zuleitungen 15 dienen.

Selbstverständlich kann ein Umlaufkreislauf 23 einer Pasteurisierungsvorrichtung 1 im Detail auch anders ausgestaltet sein als bei dem in der Fig. 1 dargestellten Ausführungsbeispiel. Beispielsweise können keine von einer Behandlungszone 3 zu einer anderen Behandlungszone3 führenden Umlaufkreislauleitungen 24 vorgesehen sein, sondern etwa eine Kreislaufführung um einzelne Zonen 3 herum, oder eine Kreislaufführung über Behandlungsflüssigkeits-Sammeltanks. Ganz grundsätzlich ist die Erfindung nicht auf bestimmte Umlaufkreislaufführungen bzw. -ausgestaltungen beschränkt, sondern kann bei jedweder Art von Ausgestaltung eines Umlaufkreislaufs 23 angewendet werden.

Wie aus Fig. 1 ersichtlich, umfasst die Pasteurisierungsvorrichtung 1 mindestens ein Flüssigkeits-Entnahmemittel 26 zur fortwährenden Entnahme einer Teilmenge an Behandlungsflüssigkeit 5 aus dem Umlaufkreislauf 23 oder aus einer Behandlungszone 3. Dieses Flüssigkeits-Entnahmemittel 26 ist strömungstechnisch mit einer Zulaufleitung 27 von zumindest einem Bypass 28 verbunden.

Des Weiteren ist eine in dem Bypass 28 angeordnete Membranfiltrationsvorrichtung 29 ausgebildet, wobei die Zulaufleitung 27 des zumindest einem Bypass 29 zur Zuführung eines entnommenen Teilstroms der Behandlungsflüssigkeit 5 zur der in dem zumindest einem Bypass 28 angeordneten Membranfiltrationsvorrichtung 29 vorgesehen ist. Eine mit dem Umlaufkreislauf 23 oder mit einer Behandlungszone 3 verbundene Ablaufleitung 30 des zumindest einen Bypass 28 zur Rückführung eines filtrierten Teilstroms der Behandlungsflüssigkeit 5 in eine Behandlungszone 3 und/oder in den Umlaufkreislauf 23 ist wie aus Fig. 1 ersichtlich ebenfalls vorgesehen.

Im Betrieb der Pasteurisierungsvorrichtung 1 wird mittels eines Flüssigkeits-Entnahmemittels 26 aus der in dem Umlaufkreislauf 23 zirkulierten Behandlungsflüssigkeit 5 oder aus Behandlungsflüssigkeit 5 in einer Behandlungszone 3 fortwährend eine Teilmenge an Behandlungsflüssigkeit 5 zur Bildung wenigstens eines Teilstromes der Behandlungsflüssigkeit 5 entnommen wird, und wird dieser wenigstens eine Teilstrom über die Zulaufleitung 27 zumindest eines Bypass 28 einer in dem zumindest einen Bypass 28 angeordneten Membranfiltrationsvorrichtung 29 zugeführt und filtriert. Anschließend wird ein so gereinigter Teilstrom wieder in den Umlaufkreislauf 23 oder in eine Behandlungszone 3 zurückgeführt.

Ganz grundsätzlich kann eine Entnahme einer Teilmenge an Behandlungsflüssigkeit zur Zuführung zu einer Membranfiltrationsvorrichtung 29 an jeder Stelle des Umlaufkreislaufes 23 erfolgen. Genauso ist eine Entnahme aus einer Behandlungszone 3 oder auch einem in den Umlaufkreislauf 23 eingebundenen Wassertank 18, 19 möglich. Vorzugsweise wird wie auch in der Fig. 1 dargestellt ist, eine Teilmenge zur Bildung des Teilstromes der Behandlungsflüssigkeit 5 aus dem Umlaufkreislauf 23 entnommen, da hierdurch eine zusätzliche Pumpe zur Entnahme der Teilmenge der Behandlungsflüssigkeit erübrigt werden kann. Ein Flüssigkeits-Entnahmemittel 26 kann zum Beispiel ein in dem Umlaufkreislauf 23 angeordnetes T-Stück zur Flüssigkeitsstromteilung umfassen. Zusätzlich kann zur Steuerung der pro Zeiteinheit fortwährend entnommenen Teilmenge an Behandlungsflüssigkeit zusätzlich ein Entnahmemittel 26 beispielsweise ein Durchflussregelventil 31 umfassen, wie dies ebenfalls in der Fig. 1 veranschaulicht ist. Bevorzugt wird zur Bildung und Leitung über einen Bypass 28 Behandlungsflüssigkeit 5 mit einer von 50 °C oder weniger entnommen.

Bei dem in der Fig. 1 dargestellten Ausführungsbeispiel wird zum Beispiel an zwei Stellen Behandlungsflüssigkeit entnommen und 2 Bypässen 28 zugeführt. Eine jeweilige Zulaufleitung 27 der Bypässe 28 ist im dargestellten Ausführungsbeispiel mit einer zur in Transportrichtung 9 zuerst angeordneten Aufwärmzone 10 führenden Umlaufkreislaufleitung 24, respektive mit einer zur in Transportrichtung 9 zuletzt angeordneten Abkühlzone 14 führenden Umlaufkreislaufleitung 24 verbunden. In diesen beiden Umlaufkreislaufleitungen 24 wird im Betrieb der Pasteurisierungsvorrichtung 1 Behandlungsflüssigkeit 5 mit relativ niedriger Temperatur geführt. Wie weiters aus der Fig. 1 wird ein filtrierter Teilstrom der Behandlungsflüssigkeit bevorzugt wieder in eine Behandlungszone 3 zurückgeführt, welche Behandlungszone 3 Behandlungsflüssigkeit 5 mit einem Temperaturniveau beinhaltet, welches der Temperatur des rückgeführten Teilstroms der Behandlungsflüssigkeit zumindest im Wesentlichen entspricht. Selbstverständlich kann in Abhängigkeit einer Größe einer Pasteurisierungsvorrichtung, oder in Abhängigkeit von einem jeweiligen Verunreinigungsgrad der Behandlungsflüssigkeit auch nur ein Bypass oder auch mehr als zwei Bypässe zur fortwährenden Reinigung einer Teilmenge der zirkulierten und ständig wiederverwendeten Behandlungsflüssigkeit vorgesehen sein.

Bei dem Verfahren zum Betreiben einer Pasteurisierungsvorrichtung 1 ist des Weiteren vorgesehen, dass der Behandlungsflüssigkeit 5 Prozesschemikalien zugegeben werden. Hierbei kann eine Zugabe von Prozesschemikalien ganz generell vorzugsweise in Form von konzentrierten, wässrigen Lösungen erfolgen.

Konkret ist vorgesehen, dass der Behandlungsflüssigkeit als Prozesschemikalie ein Biozid, ausgewählt aus einer Gruppe bestehend aus Hypochlorit, Peressigsäure, Chlordioxid und Bronopol oder eine Mischung von Bioziden ausgewählt aus dieser Gruppe zudosiert wird, derart dass eine Konzentration des Biozids oder eine Summenkonzentration an Bioziden 0,4 mmol/L nicht übersteigt. Bei einer bevorzugten Ausführungsvariante des Verfahrens kann der der Behandlungsflüssigkeit 5 vorzugsweise Chlordioxid als Biozid zudosiert werden. Es kann aber auch vorgesehen sein, dass der Behandlungsflüssigkeit 5 eine Mischung aus Chlordioxid und Hypochlorit zudosiert wird.

Des Weiteren ist vorgesehen, dass der Behandlungsflüssigkeit als Prozesschemikalie ein pH-Regulierungsmittel umfassend zumindest eine anorganische oder organische Säure zudosiert wird, derart dass ein pH-Wert der Behandlungsflüssigkeit 5 eingestellt wird auf einen Bereich von 3,5 bis 7,0, vorzugsweise 4,0 bis 6,5.

Ganz grundsätzlich kann bei dem Verfahren das Zudosieren von Prozesschemikalien manuell, zum Beispiel durch Bedienpersonal erfolgen. Vorzugsweise kann eine Zudosierung von einer oder mehrerer, oder auch aller zugegebenen Prozesschemikalien mittels insbesondere automatisiert gesteuerter Dosiervorrichtung 32 erfolgen. Wie in der Fig.1 dargestellt ist und noch anhand von Beispielen näher erläutert wird, kann eine Prozesschemikalie grundsätzlich der Behandlungsflüssigkeit 5 an einer oder mehreren Dosierstellen 33 mittels einer oder mehrerer Dosiervorrichtung(en) 32 zudosiert werden.

Im Prinzip kann eine Zudosierung von Prozesschemikalien, zum Beispiel basierend auf Erfahrungswerten, zeitgesteuert erfolgen. Vorzugsweise kann bei dem Verfahren aber vorgesehen sein, dass eine Zudosierung zumindest einer oder mehrerer oder aller Prozesschemikalie(n) basierend auf einem Messwert eines Wasserparameters, insbesondere einer Konzentration eines oder mehrerer Stoffe in der Behandlungsflüssigkeit, durchgeführt wird. Hierbei kann eine Zudosierung einer Prozesschemikalie basierend auf einer gemessenen Konzentration der Prozesschemikalie selbst und/oder auch basierend auf einer gemessenen Konzentration eines anderen, in der Behandlungsflüssigkeit 5 enthaltenen bzw. gelösten Stoffes erfolgen. Ganz grundsätzlich kann hierbei eine Messung einer Konzentration eines in der Behandlungsflüssigkeit enthaltenen bzw. gelösten Stoffes oder einer Konzentration einer Prozesschemikalie wiederum manuell, beispielsweise durch Bedienpersonal der Pasteurisierungsvorrichtung 1 durchgeführt werden.

Im Besonderen kann vorzugsweise wie in der Fig. 1 veranschaulicht aber vorgesehen sein, dass mindestens ein Ist-Wert einer Konzentration wenigstens eines in der Behandlungsflüssigkeit 5 enthaltenen, chemischen Stoffes und/oder zumindest einer zugegebenen Prozesschemikalie und/oder mindestens eines zugegebenen internen Standards an mindestens einer Messstelle 35 bzw. Messabschnitt 35 mittels wenigstens eines Konzentrationsmesssensors 34 ermittelt wird, und eine Konzentration des wenigstens einen enthaltenen, chemischen Stoffes und/oder der zumindest einen zugegebenen Prozesschemikalie basierend auf dem an der mindestens einen Messstelle 35 bzw. Messabschnitt 35 mittels des wenigstens einen Konzentrationsmesssensor 34 ermittelten Ist-Wert durch Zudosieren zumindest einer Prozesschemikalie und/oder der zumindest einen zugegebenen Prozesschemikalie an mindestens einer Dosierstelle 33 mittels wenigstens einer Dosiervorrichtung 32 hinsichtlich einem vorgebbaren Soll-Wert für die Konzentration des wenigstens einen in der Behandlungsflüssigkeit enthaltenen, chemischen Stoffes und/oder der zumindest einen zugegebenen Prozesschemikalie und/oder des mindestens einen zugegebenen internen Standards beeinflusst wird.

Bei dem in der Fig. 1 dargestellten Ausführungsbeispiel einer Pasteurisierungsvorrichtung 1 sind hierzu an mehreren Messstellen 35 bzw. Messabschnitten 35 Konzentrationsmesssensoren 34 dargestellt, mittels welcher Konzentrationssensoren 34 jeweils ein Ist-Wert einer Konzentration einer oder mehrerer Prozesschemikalien ermittelt werden kann. Ganz grundsätzlich kann es hierbei auch zweckmäßig sein, einen Ist-Wert der Konzentration eines bestimmten in der Behandlungsflüssigkeit 5 enthaltenen bzw. gelösten, chemischen Stoffes und/oder einer bestimmten zugegebenen Prozesschemikalie und/oder eines bestimmten zugegebenen internen Standards auch an mehreren Messstellen 35 mittels jeweils einem Konzentrationsmesssensor 34 zu ermitteln. Beispiele für geeignete bzw. bevorzugte Lösungen für die Ermittlung von Konzentrationen werden nachstehend noch erläutert.

Bei dem in der Fig. 1 dargestellten Ausführungsbeispiel einer Pasteurisierungsvorrichtung 1 sind des Weiteren an mehreren Dosierstellen 33 angeordnete Dosiervorrichtungen 32 dargestellt. Eine Dosiervorrichtung 32 kann vorzugsweise wie an sich bekannt zur Zudosierung einer konzentrierten, wässrigen Lösung einer oder mehrerer Prozesschemikalie(n) mit bekannter Konzentration der Prozesschemikalie(n) ausgebildet sein. Hierzu kann eine Dosiervorrichtung 32 zum Beispiel ein Dosierventil umfassen. Alternativ ist natürlich auch eine Zudosierung von festen oder gasförmigen Prozesschemikalien grundsätzlich möglich.

Bei dem in der Fig. 1 dargestellten Ausführungsbeispiel kann eine Dosiervorrichtung 32 grundsätzlich zur Zudosierung nur einer Prozesschemikalie vorgesehen sein. Es kann aber selbstverständlich auch vorgesehen sein, dass der wässrigen Behandlungsflüssigkeit mittels einer Dosiervorrichtung 32 mehrere Prozesschemikalien zudosiert werden. Hierbei können sich für verschiedene Prozesschemikalien zum Beispiel in Abhängigkeit von einer jeweils gewählten Dosierstelle 33 Vorteile ergeben, wie dies nachfolgend noch näher erläutert wird.

Eine Zugabe eines internen Standards bekannter Konzentration bzw. Menge in die Behandlungsflüssigkeit kann grundsätzlich separat von der Zugabe der Prozesschemikalie(n) erfolgen. Vorzugsweise wird ein interner Standard der Behandlungsflüssigkeit jedoch gemeinsam mit zumindest einer Prozesschemikalie und insbesondere gemeinsam mit einer oder mehreren Prozesschemikalie(n), auf deren Konzentration durch die Ermittlung der Konzentration des internen Standards rückgeschlossen werden soll, beigemengt. Im Speziellen kann also eine Prozesschemikalie und ein interner Standard gemeinsam mittels einer oder auch mehreren Dosiervorrichtung(en) 32 der Behandlungsflüssigkeit zudosiert werden. Mittels eines solchen zugegebenen, internen Standards kann im Besonderen ein Verlust an Prozesschemikalie(n), zum Beispiel wie bereits obenstehend ausgeführt durch das Berieseln der Behältnisse bzw. durch Verdampfung der Behandlungsflüssigkeit, insbesondere in einer Pasteurisierungszone und durch Ersetzen mit frischer Behandlungsflüssigkeit, erfasst werden.

Als interner Standard kann zum Beispiel ein Farbstoff, insbesondere einen Fluoreszenzfarbstoff zudosiert werden. Als geeignete interne Standards seien Fluorescein, ein Rhodamin oder vorzugsweise 1,3,6,8 Pyrentetrasulfonsäure, Natriumsalz (PTSA) genannt. Eine Ermittlung eines Ist-Wertes der Konzentration eines internen Standards kann sodann zum Beispiel durch Messung einer Fluoresenz bei einer entsprechenden Fluoreszenzwellenlänge des internen Standards erfolgen, und können hierzu beispielsweise als Fluoreszenz-Messsensoren 36 ausgebildete Konzentrationsmesssensoren 34 in der Pasteurisierungsvorrichtung 1 angeordnet sein. Eine Ermittlung der Konzentration eines internen Standards, zum Beispiel mittels solche Fluoreszenz-Messsensoren 36 kann hierbei vorzugsweise an mehreren Messstellen 35 erfolgen, wie dies auch in der Fig. 1 veranschaulicht ist.

Grundsätzlich kann die Zudosierung aller zugegebenen Prozesschemikalien basieren auf einem oder mehreren ermittelten Ist-Wert(en) der Konzentration eines internen Standards durch Vorgabe eines oder mehrerer entsprechender Soll-Werte(s) erfolgen. Da jedoch, wie obenstehend bereits ausgeführt, hierdurch nur ein Verlust an Prozesschemikalien aufgrund eines Verlustes der Behandlungsflüssigkeit an sich erfassbar ist, kann in diesem Falle eine höhere Zudosierung der Prozesschemikalie(n) vorgenommen werden, als sich rein rechnerisch aus einem ermittelten Ist-Wert der Konzentration eines internen Standards ergibt. Weiters kann zumindest für einige Prozesschemikalien eine direkte Ermittlung eines Ist-Wertes der Konzentration vorteilhaft sein. Dies gilt wie ebenfalls beschrieben vor allem für Prozesschemikalien, deren Konzentration fortwährend durch chemische Reaktionen in der Behandlungsflüssigkeit 5, insbesondere durch Reaktionen mit Mikroorganismen oder in der Behandlungsflüssigkeit enthaltene bzw. gelöste Stoffe, abnimmt.

Ganz grundsätzlich kann eine Vorgabe eines oder mehrerer Soll-Werte(s) für eine Konzentration des wenigstens einen in der Behandlungsflüssigkeit enthaltenen, chemischen Stoffes und/oder der zumindest einen zugegebenen Prozesschemikalie und/oder des mindestens einen zugegebenen internen Standards basierend auf einem oder mehreren Ist-Wert(en) natürlich variabel erfolgen. Weiters ist es durchaus auch möglich, für unterschiedliche Messstellen 35 bzw. Messabschnitte 35 unterschiedliche Soll-Werte für die Konzentration des wenigstens einen in der Behandlungsflüssigkeit enthaltenen, chemischen Stoffes und/oder der zumindest einen zugegebenen Prozesschemikalie und/oder des mindestens einen zugegebenen internen Standards vorzugeben.

Wie in der Fig. 1 dargestellt ist, kann des Weiteren ganz grundsätzlich zumindest eine Prozesschemikalie an mindestens einer in dem Umlaufkreislauf 23 oder einer Behandlungszone 3 angeordneten Dosierstelle 33 mittels wenigstens einer Dosiervorrichtung 32 zudosiert werden. Es kann vor allem in Abhängigkeit von der Art einer Prozesschemikalie aber auch sinnvoll sein, wenn zumindest eine Prozesschemikalie der Behandlungsflüssigkeit an mindestens einer an mindestens einer in einer Zuleitung 37 für frische Behandlungsflüssigkeit angeordneten Dosierstelle 33 mittels einer Dosiervorrichtung 32 zudosiert wird. Beispiele für bevorzugte Dosierstellen 33 für bestimmte Prozesschemikalien werden nachstehend anhand des Ausführungsbeispiels gemäß Fig. 1 noch näher erläutert.

Wie weiters in der Fig. 1 dargestellt ist, kann bei dem Verfahren vorgesehen sein, dass mindestens ein Ist-Wert der Konzentration wenigstens eines enthaltenen, chemischen Stoffes und/oder zumindest einer zugegebenen Prozesschemikalie und/oder mindestens eines zugegebenen internen Standards mittels wenigstens einem Konzentrationsmesssensor 34 an mindestens einer in dem Umlaufkreislauf 23 oder einer Behandlungszone 3 angeordneten Messstelle 35 ermittelt wird. Genauso ist es hier aber auch natürlich möglich, einen entsprechenden Ist-Wert mittels wenigstens einem Konzentrationsmesssensor 34 an mindestens einer in der Zuleitung 37 angeordneten Messstelle 35 zu ermitteln. Dies kann vor allem hinsichtlich einer Ermittlung eines Ist-Wertes einer Konzentration eines in der frischen Behandlungsflüssigkeit bzw. einem Frischwasser enthaltenen bzw. gelösten chemischen Stoffes sein.

Zweckmäßig kann auch eine Verfahrensführung sein, bei welcher ein erster Ist-Wert und ein zweiter Ist-Wert der Konzentration wenigstens eines enthaltenen, chemischen Stoffes und/oder zumindest einer zugegebenen Prozesschemikalie und/oder mindestens eines zugegebenen internen Standards in der Behandlungsflüssigkeit an mindesten zwei voneinander beabstandeten Messstellen 35 mittels eines ersten Konzentrationsmesssensor 34 und mittels eines zweiten Konzentrationsmesssensors 34 ermittelt wird, wie dies schematisch aus der Fig. 1 erkennbar ist. In weiterer Folge kann eine Konzentration des wenigstens einen enthaltenen, chemischen Stoffes und/oder der zumindest einen zugegebenen Prozesschemikalie Standards basierend auf dem mittels des ersten Konzentrationsmesssensors 34 ermitteln Ist-Wert und/oder basierend auf dem mittels des zweiten Konzentrationsmesssensors 34 ermittelten Ist-Wert hinsichtlich einem vorgebbaren Soll-Wert für die Konzentration des wenigstens einen in der Behandlungsflüssigkeit enthaltenen, chemischen Stoffes und/oder der zumindest einen zugegebenen Prozesschemikalie und/oder des mindestens einen zugegebenen internen Standards beeinflusst werden. In diesem Zusammenhang kann es zum Beispiel von Vorteil sein, wenn der erste Ist-Wert mittels einem einer Dosiervorrichtung 32 bezogen auf eine Strömungsrichtung der Behandlungsflüssigkeit stromaufwärts benachbart angeordneten ersten Konzentrationsmesssensor 34 ermittelt wird, und der zweite Ist-Wert mittels einem bezogen auf eine Strömungsrichtung der Behandlungsflüssigkeit, stromaufwärts vom ersten Konzentrationsmesssensor 34 mindestens 5 Meter beabstandet angeordneten, zweiten Konzentrationsmesssensor 34 ermittelt wird.

Hinsichtlich der Messung einer Konzentration mittels eines Konzentrationsmesssensors sowie der Zudosierung von Prozesschemikalien mittels Dosiervorrichtungen können sich durch gewisse, spezifische Verfahrensführungen Vorteile ergeben, welche im folgenden anhand von Ausführungsbeispielen näher beschrieben werden.

Zum Beispiel kann es von Vorteil sein sein, dass das Biozid, insbesondere Chlordioxid einem Volumenstrom der Behandlungsflüssigkeit 5 zudosiert wird, welcher Volumenstrom der Behandlungsflüssigkeit 5 in einer strömungstechnisch zu einer Abkühlzone 14 führenden Umlaufkreislaufleitung 24 geführt wird, wie dies auch in der Fig. 1 dargestellt ist. Wie ebenfalls in der Fig. 1 veranschaulicht ist, kann das Biozid der Behandlungsflüssigkeit 5 ganz grundsätzlich an mindestens einer in dem Umlaufkreislauf 23 oder einer Behandlungszone 3 angeordneten Dosierstelle 33 zudosiert werden, an welcher Dosierstelle 33 Behandlungsflüssigkeit 5 mit einer Temperatur von 20 °C bis 55 °C geführt wird. Hierbei kann bei dem in der Fig. 1 dargestellten Ausführungsbeispiel ein Biozid, insbesondere Chlordioxid mittels der dargestellten Dosiervorrichtungen 32, 38 zudosiert werden. Diese Maßnahmen sind vor allem deshalb sinnvoll, da in solchen Bereichen einer Pasteurisierungsvorrichtung 1 Bedingungen vorherrschen, welche eine Bildung von Biofilmen aufgrund einer starken Vermehrung von Mikroorganismen besonders begünstigen. Bevorzugt kann der Behandlungsflüssigkeit 5 an mindestens einer Dosierstelle 33 bzw. mindestens einem Dosierabschnitt 33 mittels wenigstens einer Dosiervorrichtung 32, 38 Biozid zudosiert werden, an welcher Dosierstelle 33 oder an welchem Dosierabschnitt 33 Behandlungsflüssigkeit 5 mit einer Temperatur von 30 °C bis 45 °C geführt wird.

Außerdem kann wie ebenfalls in der Fig. 1 dargestellt ist, das Biozid der Behandlungsflüssigkeit 5 an mindestens einer in dem zumindest einem Bypass 28 strömungstechnisch folgend auf eine Membranfiltrationsvorrichtung 29 angeordneten Dosierstelle 33 zudosiert werden, wie dies anhand der in der Fig. 1 dargestellten, entsprechend positionierten Dosiervorrichtungen 32, 38 veranschaulicht ist.

Wie aus der Fig. 1 erkennbar ist, kann ganz grundsätzlich mindestens ein Ist-Wert der Biozid-Konzentration in der Behandlungsflüssigkeit 5 an mindestens einer Messstelle 35 mittels wenigstens einem Biozid-Konzentrationsmesssensor 34, 39 ermittelt werden, und kann eine Konzentration des Biozids in der Behandlungsflüssigkeit 5 basierend auf dem an der mindestens einen Messstelle 35 ermittelten Ist-Wert durch Zudosieren des Biozids an mindestens einer Dosierstelle 33 mittels wenigstens einer Dosiervorrichtung 32, 38 hinsichtlich einem vorgebbaren Soll-Wert für die Konzentration des Biozids beeinflusst werden. Mindestens ein Ist-Wert der Biozid-Konzentration kann hierbei an mindestens einer in dem Umlaufkreislauf 23 oder einer Behandlungszone 3 angeordneten Messstelle 35 ermittelt werden, an welcher Messstelle 35 Behandlungsflüssigkeit 5 mit einer Temperatur von 20 °C bis 55 °C geführt wird, wie dies anhand der entsprechend positionierten Konzentrationsmesssensoren 34, 39 veranschaulicht ist. Ganz grundsätzlich kann es von Vorteil sein, wenn mehrere Ist-Werte einer Biozid-Konzentration in der Behandlungsflüssigkeit 5 an mehreren Messstellen 35 einer Pasteurisierungsvorrichtung 1 mittels mehrerer Biozid-Konzentrationsmesssensoren 34, 39 ermittelt werden, zum Beispiel in dem Umlaufkreislauf 23 bzw. dessen Umlaufkreislaufleitungen 24 und/oder Behandlungszone(n) 3, wie dies ebenfalls in der Fig. 1 dargestellt ist. Vorzugsweise kann vorgesehen sein, dass mittels wenigstens einem Konzentrationssensor 34, 39 mindestens ein Ist-Wert der Biozid-Konzentration an mindesten einer Messstelle 35 bzw. mindestens einem Messabschnitt 35 ermittelt wird, an welcher Messstelle 35 bzw. an welchem Messabschnitt 35 Behandlungsflüssigkeit 5 mit einer Temperatur von 30 °C bis 45 °C geführt wird.

Im Falle einer Zudosierung von Chlordioxid als Biozid kann mindestens ein Ist-Wert einer Chlordioxid-Konzentration an mindestens eine Messstelle 35 bzw. Messabschnitt 35 mittels einem zur Bestimmung von Chlordioxid ausgebildeten Konzentrationsesssensor 34 ermittelt werden. Konzentrationsmesssensoren 34 zur Messung einer Chlordioxid-Konzentration sind an sich bekannt. Grundsätzlich kann eine Chlordioxid-Konzentration mittels unterschiedlicher Messmethoden bzw. Messprinzipien ermittelt werden. So können zum Beispiel amperometrische, fluorometrische oder optische, eine Lichtabsorption messende Sensoren 34 eingesetzt werden. Im Falle einer Zudosierung eines anderen Biozids als Chlordioxid kann dementsprechend natürlich ein anderer, zur Messung der Konzentration eines solchen anderen Biozids zum Einsatz kommen.

Bevorzugt kann eine Dosiervorrichtung 32, 38 oder können die Dosiervorrichtungen 32, 38 wie bei dem Ausführungsbeispiel gemäß der Fig. 1 dargestellt ist, bei Verwendung von Chlordioxid als Biozid mit einer Bereitstellungvorrichtung 40 für Chlordioxid verbunden sein. Eine solche Bereitstellungvorrichtung 40 kann zur chemischen Herstellung und Bereitstellung von Chlordioxid für die Dosiervorrichtung(en) 32, 38 ausgebildet sein, sodass im Betrieb der Pasteurisierungsvorrichtung 1 Chlordioxid mittels der Bereitstellungsvorrichtung 40 in situ chemisch hergestellt und für die Dosiervorrichtung(en) 32, 38 bereitgestellt werden kann. Eine Bereitstellungsvorrichtung 40 kann hierbei zur chemischen Herstellung von Chlordioxid nach einem an sich bekannten Verfahren ausgebildet sein, wie etwa dem Salzsäure-Chlorit-Verfahren oder dem Persulfat-Chlorit-Verfahren bzw. Peroxodisulfat-Chlorit-Verfahren. Vorzugsweise kann die Bereitstellungsvorrichtung 40 zur Herstellung von Chlordioxid nach dem sogenannten Einkomponenten-Feststoffverfahren ausgebildet sein.

Ein Soll-Wert einer Biozid-Konzentration, insbesondere Chlordioxid-Konzentartion durchaus bedarfsabhängig, zum Beispiel in Abhängigkeit von dem Verschmutzungsgrad und/oder in Abhängigkeit zum Beispiel von einer ermittelten Keimzahl in der Behandlungsflüssigkeit variiert bzw. variabel vorgegeben werden.

Bei dem Verfahren zum Betreiben einer Pasteurisierungsvorrichtung 1 kann weiters vorgesehen sein, dass der Behandlungsflüssigkeit 5 ein pH-Regulierungsmittel umfassend wenigstens eine Säure ausgewählt aus einer Gruppe bestehend aus Phosphorsäure, Ameisensäure, Essigsäure, Zitronensäure, Gluconsäure, Milchsäure, Glucoheptansäure oder eine Mischung von Säuren ausgewählt aus dieser Gruppe zudosiert wird. Der pH-Wert der Behandlungsflüssigkeit zeigt großen Einfluss auf weitere Eigenschaften der Behandlungsflüssigkeit und insbesondere auf durch die Behandlungsflüssigkeit hervorgerufene, unerwünschte Nebenwirkungen. Im Falle der Behandlung von ein Metall aufweisenden Behältnissen, insbesondere Aluminium aufweisende Behältnisse bzw. Aluminium-Dosen hat sich zum Einen der pH-Wert der Behandlungsflüssigkeit per se als wichtiger Parameter zum Hintanhalten von Verfärbungen an den Behältnissen erwiesen. Des Weiteren hat sich gezeigt, dass aber auch die Wahl der zur pH-Regulierung eingesetzten Säure(n) wichtig hinsichtlich eins Hintanhaltens von Verfärbungen an den Behältnissen, insbesondere der Bildung der sogenannten Brunnenwasserschwärze wichtig ist.

Bei dem Verfahren kann insbesondere vorgesehen sein, dass das pH-Regulierungsmittel der Behandlungsflüssigkeit 5 an mindestens einer Dosierstelle 33 zudosiert wird, an welcher Dosierstelle 33 Behandlungsflüssigkeit 5 mit einer Temperatur von 40 °C bis 90 °C geführt wird, wie dies in der Fig. 1 anhand der Dosiervorrichtung 32, 41 dargestellt ist.

Des Weiteren kann mittels wenigstens eines pH-Messsensors 34, 42 zumindest ein Ist-Wert eines pH-Wertes der Behandlungsflüssigkeit an mindestens einer Messstelle 35 ermittelt werden. In weiterer Folge kann sodann ein pH-Regulierungsmittel basierend auf einem ermittelten Ist-Wert eines pH-Wertes der Behandlungsflüssigkeit 5 zudosiert werden. Wie in der Fig. 1 veranschaulicht ist, kann der zumindest eine Ist-Wert eines pH-Wertes der Behandlungsflüssigkeit 5 an mindestens einer Messstelle 35 ermittelt werden, an welcher Messstelle 35 Behandlungsflüssigkeit mit einer Temperatur von 40 °C bis 90 °C geführt wird.

Des Weiteren kann es zweckmäßig sein, der Behandlungsflüssigkeit bei dem Verfahren zum Betreiben einer Pasteurisierungsvorrichtung 1 als Prozesschemikalie(n) wenigstens eine komplexbildende Säure ausgewählt aus einer Gruppe bestehend aus Gluconsäure, Milchsäure, Zitronensäure oder eine Mischung von Säuren ausgewählt aus dieser Gruppe zuzudosieren. Dies derart, dass eine Konzentration der wenigstens einen komplexbildenden Säure oder eine Summenkonzentration der zudosierten, komplexbildenden Säuren 2,2 mmol/L nicht übersteigt.

In diesem Zusammenhang kann es von Vorteil sein, wenn die wenigstens eine komplexbildende Säure der Behandlungsflüssigkeit 5 an mindestens einer Dosierstelle 33 zudosiert wird, an welcher Dosierstelle 33 Behandlungsflüssigkeit 5 mit einer Temperatur von 55 °C bis 95 °C geführt wird, wie dies auch bei dem Ausführungsbeispiel gemäß Fig. 1 anhand einer entsprechend positionierten Dosiervorrichtung 32, 43 gezeigt ist. Die oben genannten Säuren sind grundsätzlich als Korrosionsschutzmittel und Steinverhütungsmittel wirksam.

Zusätzlich kann es bei einer Ausführungsform des Verfahrens sinnvoll sein, wenn dass der Behandlungsflüssigkeit als Prozesschemikalie(n) wenigstens eine komplexbildende Phosphonsäure ausgewählt aus einer Gruppe bestehend aus 1-Hydroxyethan-(1,1-diphosphonsäure), 3-Carboxy-3-phosphonoadipinsäure, Diethylentriaminpenta(methylenphosphonsäure), Amino-tris(methylenphosphonsäure), oder wenigstens ein Phosphonat einer aus dieser Gruppe ausgewählten Phosphonsäure, oder eine Mischung von Phosphonsäuren und/oder Phosphonaten ausgewählt aus dieser Gruppe zudosiert wird. Dies derart, dass eine Konzentraion der des wenigstens einen komplexbildenden Phosphonsäure oder des wenigstens einen Phosphonats oder eine Summenkonzentration der zudosierten, komplexbildenden Phosphonsäuren und/oder Phosphonate 0,2 mmol/L nicht übersteigt. Die wenigstens eine komplexbildende Phosphonsäure und/oder das wenigstens eine komplexbildende Phosphonat kann der Behandlungsflüssigkeit 5 an mindestens einer Dosierstelle 33 zudosiert werden, an welcher Dosierstelle 33 Behandlungsflüssigkeit 5 mit einer Temperatur von 55 °C bis 95 °C geführt wird, wie dies anhand der in der Fig. 1 dargestellten, entsprechend positionierten Dosiervorrichtung 32, 43 veranschaulicht ist. Die Dosiervorrichtung 32, 43 kann bei dem in der Fig. 1 dargestellten Ausführungsbeispiel demgemäß zur Zudosierung sowohl einer komplexbildenden Säure als auch eines Phosphonats vorgesehen sein. Auch die oben genannten Phosphonate sind hinsichtlich Steinverhütung und auch Korrosionsschutz wirksam.

Es kann aber auch vorgesehen sein, dass der Behandlungsflüssigkeit als Prozesschemikalie ein zweiwertiges Zinksalz zudosiert wird, und zwar derart, dass eine Konzentration des zweiwertigen Zink-Salzes 0,06 mmol/L nicht übersteigt.

Auch Zn²⁺-Salze haben sich vorrangig als Korrosionsinhibitoren wirksam erwiesen, und können der Behandlungsflüssigkeit grundsätzlich gemeinsam mit anderen Prozesschemikalien bzw. Korrosionsinhibitoren zudosiert werden. Eine Zudosierung eines zweiwertigen Zinksalzes kann wiederum mittels der in der Fig. 1 mit 32, 43 bezeichneten Dosiervorrichtung erfolgen. Ganz grundsätzlich kann aber auch eine andere bzw. weitere Dosiervorrichtung hierfür vorgesehen sein.

Des Weiteren kann vorgesehen sein, dass der Behandlungsflüssigkeit als Prozesschemikalie eine oligomere oder polymere Substanz, ausgewählt aus einer Gruppe bestehend aus Polyphosphaten, wasserlöslichen Polyacrylaten und Copolymeren aus Maleinsäure und Acrylsäure, oder eine Mischung aus oligomeren oder polymeren Substanzen ausgewählt aus dieser Gruppe zudosiert wird, derart dass eine Konzentration der zudosierten oligomeren oder polymeren Substanz, oder eine Summenkonzentration der zudosierten oligomeren oder polymeren Substanzen 0,4 g/L nicht übersteigt.

Diese oligomeren oder polymeren Substanzen haben sich vor allem hinsichtlich eines Hintanhaltens von Steinbildung ebenfalls als wirksam erwiesen. Die betreffenden Oligomere bzw. Polymere können beispielsweise Molekulargewichte im Bereich von 4000 g/mol bis 15000 g/mol aufweisen. Wiederum kann eine Zudosierung einer oligomeren und/oder polymeren Substanz bei dem in der Fig. 1 dargestellten Ausführungsbeispiel mittels der Dosiervorrichtung 32, 43, oder einer oder mehrerer weiterer Dosiervorrichtung(en) erfolgen.

Außerdem kann bei dem Verfahren von Vorteil sein, wenn der Behandlungsflüssigkeit als Prozesschemikalie ein Phosphorsäureester oder eine Mischung aus Phosphorsäureestern zudosiert wird, derart dass eine Konzentration des Phosphorsäureester oder eine Summenkonzentration der Phosphorsäureester 0,1 g/L nicht übersteigt.

Phosphorsäureester haben sich per se oder auch in Kombination mit anderen Prozesschemikalien wiederum als wirksame Korrosionsinhibitoren erwiesen. Auch ein oder mehrere Phosphorsäureester kann bzw. können grundsätzlich mit einer Dosiervorrichtung 32, 43 zudosiert werden, wie dies anhand des in der Fig. 1 dargestellten Ausführungsbeispiels veranschaulicht ist.

Vor allem in Zusammenhang mit Steinverhütung kann es bei dem Verfahren außerdem zweckmäßig sein, wenn mittels wenigstens eines Ca²⁺- und/oder Mg²⁺-Messsensors 34, 44 ein Ist-Wert einer Wasserhärte der Behandlungsflüssigkeit an mindestens einer Messstelle 35 ermittelt wird. Sensoren zum Ermitteln einer Ca²⁺- und/oder Mg²⁺-Konzentration können hierbei insbesondere ionenselektive Elektroden umfassen. Insbesondere kann mittels wenigstens eines Ca²⁺- und/oder Mg²⁺-Messsensors 34, 44 ein Ist-Wert einer Wasserhärte der Behandlungsflüssigkeit an mindestens einer in einer Zuleitung 37 für frische Behandlungsflüssigkeit angeordneten Messstelle 35 ermittelt werden, wie dies in der Fig. 1 veranschaulicht ist. In weiterer Folge kann eine Zudosierung der oben genannten, hinsichtlich Steinverhütung bzw. Steinbildungsverhütung wirksamen Prozesschemikalien basierend auf einem gemessenen Ist-Wert der Wasserhärte vorgenommen werden.

Des Weiteren kann vorgesehen sein, dass an mindestens einer in einer Zuleitung 37 für frische Behandlungsflüssigkeit angeordneten Messstelle 35 ein Ist-Wert einer Leitfähigkeit von zugeführter, frischer Behandlungsflüssigkeit ermittelt wird.

Grundsätzlich kann die Leitfähigkeit der frischen Behandlungsflüssigkeit manuell durch Probenentnahme an der Messstelle und anschließende Labor-Messung ermittelt werden. Vorzugsweise kann vorgesehen sein, dass die Leitfähigkeit mittels einem durch einen Leitfähigkeitssensor 45 gebildeten Konzentrationsmesssensor 34 ermittelt wird, wie dies auch aus der Fig. 1 ersichtlich ist. Die Ermittlung der Leitfähigkeit der frischen Behandlungsflüssigkeit steht hierbei repräsentativ für die Summenkonzentration an gelösten Ionen in der frisch zugeführten Behandlungsflüssigkeit.

Die Ermittlung der Leitfähigkeit stellt also einen Ist-Wert an in der zugeführten, frischen Behandlungsflüssigkeit enthaltenen, gelösten, ionischen Stoffe bereit, welche hinsichtlich der Bildung von Ablagerungen oder auch Verfärbungen im Zuge der Behandlung mit Behandlungsflüssigkeit relevant sein können. Auf Basis eines solchen ermittelten Ist-Wertes der Leitfähigkeit der zugeführten, frischen Behandlungsflüssigkeit kann sodann eine Vorgabe von Soll-Werten für die Konzentration von Prozesschemikalien in der Behandlungsflüssigkeit 5 erfolgen. Beispielsweise kann vorgesehen sein, dass bei Ermittlung eines erhöhten bzw. gro-ßen Ist-Wertes der Leitfähigkeit, ein Soll-Wert oder Soll-Werte für die Prozesschemikalie(n) erhöht wird. Bei Ermittlung eines erniedrigten bzw. kleinen Ist-Wertes der Leitfähigkeit kann umgekehrt vorgegangen werden. Respektive bzw. in weiterer Folge kann dann vorgesehen sein, dass eine Dosiermenge an zumindest einer Prozesschemikalie erhöht respektive erniedrigt wird. In anderen Worten ausgedrückt kann ein Soll-Wert für die Konzentration von einer oder mehreren Prozesschemikalie(n) zumindest teilweise oder überwiegend basierend auf der ermittelten Leitfähigkeit der zugeführten, frischen Behandlungsflüssigkeit vorgegeben werden. Respektive kann eine Dosiermenge zumindest einer Prozesschemikalie hinsichtlich einem vorgebbaren Soll-Wert für eine Konzentration eines oder mehrerer in der Behandlungsflüssigkeit enthaltenen chemischen Stoffe(s), insbesondere Ca²⁺- und Mg²⁺-Ionen angepasst werden.

Wie anhand des Ausführungsbeispiels gemäß Fig. 1 veranschaulicht ist, kann in sicherheitstechnischer Hinsicht bei dem Verfahren auch vorgesehen sein, dass bei einer detektierten Überschreitung eines vorgegebenen Soll-Werts der Konzentration einer zudosierten Prozesschemikalie, insbesondere eines zudosierten Biozids mittels einer mit den Behandlungszonen 3 wirkverbundenen Absaugvorrichtung 46 Gasatmosphäre aus den Behandlungszonen 3 abgesaugt wird.

Wie ebenfalls in der Fig. 1 dargestellt kann zur automatischen Steuerung der Zudosierung der Prozesschemikalie(n) wie an sich bekannt eine Steuerungsvorrichtung 47 vorgesehen sein. Eine solche Steuerungsvorrichtung 47 kann wie veranschaulicht insbesondere mit den beispielhaft dargestellten Konzentrationsmesssensoren 34 und Dosiervorrichtungen 32, aber auch mit anderen bzw. weiteren Komponenten der Pasteurisierungsvorrichtung 1 signalverbunden sein.

### Bezugszeichenaufstellung

| | | | |
|---|---|---|---|
| | | 36 | Fluoreszenz-Messsensor |
| 1 | Pasteurisierungsvorrichtung | 37 | Zuleitung |
| 2 | Behältnis | 38 | Dosiervorrichtung |
| 3 | Behandlungszone | 39 | Konzentrationsmesssensor |
| 4 | Berieselungsmittel | 40 | Bereitstellungsvorrichtung |
| 5 | Behandlungsflüssigkeit | | |
| 6 | Außenseite | 41 | Dosiervorrichtung |
| 7 | Transportmittel | 42 | pH-Messsensor |
| 8 | Förderband | 43 | Dosiervorrichtung |
| 9 | Transportrichtung | 44 | Ca²⁺- und/oder Mg²⁺-Messsensor |
| 10 | Aufwärmzone | 45 | Leitfähigkeitssensor |
| 11 | Aufwärmzone | 46 | Absaugvorrichtung |
| 12 | Pasteurisierungszone | 47 | Steuerungsvorrichtung |
| 13 | Abkühlzone | | |
| 14 | Abkühlzone | | |
| 15 | Zuleitung | | |
| 16 | Temperierungsmittel | | |
| 17 | Ventil | | |
| 18 | Warmwassertank | | |
| 19 | Kaltwassertank | | |
| 20 | Heizmittel | | |
| 21 | Kühlmittel | | |
| 22 | Sammelelement | | |
| 23 | Umlaufkreislauf | | |
| 24 | Umlaufkreislaufleitung | | |
| 25 | Fördermittel | | |
| 26 | Entnahmemittel | | |
| 27 | Zulaufleitung | | |
| 28 | Bypass | | |
| 29 | Membranfiltrationsvorrichtung | | |
| 30 | Ablaufleitung | | |
| 31 | Durchflussregelventil | | |
| 32 | Dosiervorrichtung | | |
| 33 | Dosierstelle | | |
| 34 | Konzentrationsmesssensor | | |
| 35 | Messstelle | | |

## Patentansprüche

1. Verfahren zum Betreiben einer Pasteurisierungsvorrichtung (1) für die Pasteurisierung von in verschlossenen Behältnissen (2) abgefüllten Lebensmitteln, umfassend
Transportieren von mit Lebensmittel befüllten und verschlossenen Behältnissen (2) durch mehrere Behandlungszonen (3) in einer Transportrichtung (9) mittels eines Transportmittels (7),
Behandeln der Lebensmittel in den Behandlungszonen (3) durch Applizieren einer temperierten, wässrigen Behandlungsflüssigkeit (5) auf eine Außenseite (6) der Behältnisse (2), wobei jeder Behandlungszone (3) über eine Zuleitung (15) Behandlungsflüssigkeit (5) mit einer bestimmten Temperatur zugeführt wird, derart dass die Lebensmittel in den verschlossenen Behältnissen (2) in Transportrichtung (9) in wenigstens einer Aufwärmzone (10, 11) vorgewärmt, in Transportrichtung (9) folgend in wenigstens einer Pasteurisierungszone (12) auf Pasteurisierungstemperatur erhitzt und in Transportrichtung (9) folgend in wenigstens einer Abkühlzone (13, 14) abgekühlt werden,
und wobei die Behandlungsflüssigkeit (5) nach Applikation auf die Behältnisse (2) in den Behandlungszonen (3) gesammelt wird, und gesammelte Behandlungsflüssigkeit (5) zur Wiederverwendung über Umlaufkreislaufleitungen (24) eines Umlaufkreislaufs (23) zumindest einer Behandlungszone (5) wieder zugeführt wird,
und wobei mittels mindestens eines Flüssigkeits-Entnahmemittel (26) aus der in dem Umlaufkreislauf (23) zirkulierten Behandlungsflüssigkeit (5) oder aus Behandlungsflüssigkeit (5) in einer Behandlungszone (3) fortwährend eine Teilmenge an Behandlungsflüssigkeit zur Bildung wenigstens eines Teilstromes der Behandlungsflüssigkeit (5) entnommen wird, welcher wenigstens eine Teilstrom über eine Zulaufleitung (27) zumindest eines Bypass (28) einer in dem zumindest einen Bypass (28) angeordneten Membranfiltrationsvorrichtung (29) zugeführt und filtriert wird, und anschließend wieder in den Umlaufkreislauf (23) oder in eine Behandlungszone (3) zurückgeführt wird,
und wobei der Behandlungsflüssigkeit (5) Prozesschemikalien zugegeben werden,
**dadurch gekennzeichnet, dass**
der Behandlungsflüssigkeit als Prozesschemikalie ein Biozid, ausgewählt aus einer Gruppe bestehend aus Hypochlorit, Peressigsäure, Chlordioxid und Bronopol oder eine Mischung von Bioziden ausgewählt aus dieser Gruppe zudosiert wird, derart dass eine Konzentration des Biozids oder eine Summenkonzentration an Bioziden 0,4 mmol/L nicht übersteigt,
und dass der Behandlungsflüssigkeit als Prozesschemikalie ein pH-Regulierungsmittel umfassend zumindest eine anorganische oder organische Säure zudosiert wird, derart dass ein pH-Wert der Behandlungsflüssigkeit (5) eingestellt wird auf einen Bereich von 3,5 bis 7,0.

2. Verfahren nach Anspruch 1, **dadurch gekennzeichnet, dass** der Behandlungsflüssigkeit (5) Chlordioxid als Biozid zudosiert wird.

3. Verfahren nach Anspruch 1 oder 2, **dadurch gekennzeichnet, dass** das Biozid einem Volumenstrom der Behandlungsflüssigkeit (5) zudosiert wird, welcher Volumenstrom der Behandlungsflüssigkeit (5) in einer strömungstechnisch zu einer Abkühlzone (14) führenden Umlaufkreislaufleitung (24) geführt wird.

4. Verfahren nach einem der vorhergehenden Ansprüche, **dadurch gekennzeichnet, dass** das Biozid der Behandlungsflüssigkeit (5) an mindestens einer in dem Umlaufkreislauf (23) oder einer Behandlungszone (3) angeordneten Dosierstelle (33) zudosiert wird, an welcher Dosierstelle (33) Behandlungsflüssigkeit (5) mit einer Temperatur von 20 °C bis 55 °C geführt wird.

5. Verfahren nach einem der vorhergehenden Ansprüche, **dadurch gekennzeichnet, dass** das Biozid der Behandlungsflüssigkeit (5) an mindestens einer in dem zumindest einem Bypass (28) strömungstechnisch folgend auf eine Membranfiltrationsvorrichtung (29) angeordneten Dosierstelle (33) zudosiert wird.

6. Verfahren nach einem der vorhergehenden Ansprüche, **dadurch gekennzeichnet, dass** mindestens ein Ist-Wert der Biozid-Konzentration in der Behandlungsflüssigkeit (5) an mindestens einer Messstelle (35) mittels wenigstens einem Biozid-Konzentrationsmesssensor (34, 39) ermittelt wird, und eine Konzentration des Biozids in der Behandlungsflüssigkeit (5) basierend auf dem an der mindestens einen Messstelle (35) ermittelten Ist-Wert durch Zudosieren des Biozids an mindestens einer Dosierstelle (33) mittels wenigstens einer Dosiervorrichtung (32, 38) hinsichtlich einem vorgebbaren Soll-Wert für die Konzentration des Biozids beeinflusst wird.

7. Verfahren nach Anspruch 6, **dadurch gekennzeichnet, dass** mindestens ein Ist-Wert der Biozid-Konzentration an mindestens einer in dem Umlaufkreislauf (23) oder einer Behandlungszone (3) angeordneten Messstelle (35) ermittelt wird, an welcher Messstelle (35) Behandlungsflüssigkeit (5) mit einer Temperatur von 20 °C bis 55 °C geführt wird.

8. Verfahren nach einem der vorhergehenden Ansprüche, **dadurch gekennzeichnet, dass** der Behandlungsflüssigkeit (5) ein pH-Regulierungsmittel umfassend wenigstens eine Säure ausgewählt aus einer Gruppe bestehend aus Schwefelsäure, Phosphorsäure, Ameisensäure, Essigsäure, Zitronensäure, Gluconsäure, Milchsäure, Glucoheptansäure oder eine Mischung von Säuren ausgewählt aus dieser Gruppe zudosiert wird.

9. Verfahren nach einem der vorhergehenden Ansprüche, **dadurch gekennzeichnet, dass** das pH-Regulierungsmittel der Behandlungsflüssigkeit (5) an mindestens einer Dosierstelle (33) zudosiert wird, an welcher Dosierstelle (33) Behandlungsflüssigkeit (5) mit einer Temperatur von 40 °C bis 90 °C geführt wird.

10. Verfahren nach einem der vorhergehenden Ansprüche, **dadurch gekennzeichnet, dass** der Behandlungsflüssigkeit als Prozesschemikalie(n) wenigstens eine komplexbildende Säure ausgewählt aus einer Gruppe bestehend aus Gluconsäure, Milchsäure, Zitronensäure oder eine Mischung von Säuren ausgewählt aus dieser Gruppe zudosiert wird, derart dass eine Konzentration der wenigstens einen komplexbildenden Säure oder eine Summenkonzentration der komplexbildenden Säuren 2,2 mmol/L nicht übersteigt.

11. Verfahren nach Anspruch 10, **dadurch gekennzeichnet, dass** die wenigstens eine komplexbildende Säure der Behandlungsflüssigkeit (5) an mindestens einer Dosierstelle (33) zudosiert wird, an welcher Dosierstelle (33) Behandlungsflüssigkeit (5) mit einer Temperatur von 55 °C bis 95 °C geführt wird.

12. Verfahren nach einem der vorhergehenden Ansprüche, **dadurch gekennzeichnet, dass** der Behandlungsflüssigkeit als Prozesschemikalie(n) wenigstens eine komplexbildende Phosphonsäure ausgewählt aus einer Gruppe bestehend aus 1-Hydroxyethan-(1,1-diphosphonsäure), 3-Carboxy-3-phosphonoadipinsäure, Diethylentriaminpenta(methylenphosphonsäure), Amino-tris(methylenphosphonsäure), oder wenigstens ein Phosphonat einer aus dieser Gruppe ausgewählten Phosphonsäure, oder eine Mischung von Phosphonsäuren und/oder Phosphonaten ausgewählt aus dieser Gruppe zudosiert wird, derart dass eine Konzentration der wenigstens einen komplexbildenden Phosphonsäure oder des wenigstens einen Phosphonats, oder eine Summenkonzentration der zudosierten, komplexbildenden Phosphonsäuren und/oder Phosphonate 0,2 mmol/L nicht übersteigt.

13. Verfahren nach Anspruch 12, **dadurch gekennzeichnet, dass** die wenigstens eine komplexbildende Phosphonsäure und/oder das wenigstens eine komplexbildende Phosphonat der Behandlungsflüssigkeit (5) an mindestens einer Dosierstelle (33) zudosiert wird, an welcher Dosierstelle (33) Behandlungsflüssigkeit (5) mit einer Temperatur von 55 °C bis 95 °C geführt wird.

14. Verfahren nach einem der vorhergehenden Ansprüche, **dadurch gekennzeichnet, dass** der Behandlungsflüssigkeit als Prozesschemikalie ein zweiwertiges Zinksalz zudosiert wird, derart, dass eine Konzentration des zweiwertigen Zink-Salzes 0,06 mmol/L nicht übersteigt.

15. Verfahren nach einem der Vorhergehenden Ansprüche, **dadurch gekennzeichnet, dass** der Behandlungsflüssigkeit als Prozesschemikalie eine oligomere oder polymere Substanz, ausgewählt aus einer Gruppe bestehend aus Polyphosphaten, wasserlöslichen Polyacrylaten und Copolymeren aus Maleinsäure und Acrylsäure, oder eine Mischung aus oligomeren oder polymeren Substanzen ausgewählt aus dieser Gruppe zudosiert wird, derart dass eine Konzentration der zudosierten oligomeren oder polymeren Substanz, oder eine Summenkonzentration der zudosierten oligomeren oder polymeren Substanzen 0,4 g/L nicht übersteigt.

16. Verfahren nach einem der vorhergehenden Ansprüche, **dadurch gekennzeichnet, dass** der Behandlungsflüssigkeit als Prozesschemikalie ein Phosphorsäureester oder eine Mischung aus Phosphorsäureestern zudosiert wird, derart dass eine Konzentration des Phosphorsäureester oder eine Summenkonzentration der Phosphorsäureester 0,1 g/L nicht übersteigt.

17. Verfahren nach einem der vorhergehenden Ansprüche, **dadurch gekennzeichnet, dass** mindestens ein Ist-Wert einer Konzentration wenigstens eines in der Behandlungsflüssigkeit (5) enthaltenen, chemischen Stoffes und/oder zumindest einer zugegebenen Prozesschemikalie und/oder mindestens eines zugegebenen internen Standards an mindestens einer Messstelle (35) mittels wenigstens eines Konzentrationsmesssensors (34) ermittelt wird, und eine Konzentration des wenigstens einen enthaltenen, chemischen Stoffes und/oder der zumindest einen zugegebenen Prozesschemikalie basierend auf dem an der mindestens einen Messstelle (35) mittels des wenigstens einen Konzentrationsmesssensor (34) ermittelten Ist-Wert durch Zudosieren zumindest einer Prozesschemikalie und/oder der zumindest einen zugegebenen Prozesschemikalie an mindestens einer Dosierstelle (33) mittels wenigstens einer Dosiervorrichtung (32) hinsichtlich einem vorgebbaren Soll-Wert für die Konzentration des wenigstens einen in der Behandlungsflüssigkeit enthaltenen, chemischen Stoffes und/oder der zumindest einen zugegebenen Prozesschemikalie und/oder des mindestens einen zugegebenen internen Standards beeinflusst wird.

18. Verfahren nach Anspruch 17, **dadurch gekennzeichnet, dass** mittels wenigstens eines pH-Messsensors (34, 42) zumindest ein Ist-Wert eines pH-Wertes der Behandlungsflüssigkeit an mindestens einer Messstelle (35) ermittelt wird.

19. Verfahren nach Anspruch 18, **dadurch gekennzeichnet, dass** der zumindest eine Ist-Wert eines pH-Wertes der Behandlungsflüssigkeit (5) an mindestens einer Messstelle (35) ermittelt wird, an welcher Messstelle (35) Behandlungsflüssigkeit mit einer Temperatur von 40 °C bis 90 °C geführt wird.

20. Verfahren nach einem der Ansprüche 17 bis 19, **dadurch gekennzeichnet, dass** mittels wenigstens eines Ca²⁺- und/oder Mg²⁺-Messsensors (34, 44) ein Ist-Wert einer Wasserhärte der Behandlungsflüssigkeit an mstens einer Messstelle (35) ermittelt wird.

21. Verfahren nach Anspruch 20, **dadurch gekennzeichnet, dass** mittels wenigstens eines Ca²⁺- und/oder Mg²⁺-Messsensors (34, 44) ein Ist-Wert einer Wasserhärte der Behandlungsflüssigkeit an mindestens einer in einer Zuleitung (37) für frische Behandlungsflüssigkeit angeordneten Messstelle (35) ermittelt wird.

22. Verfahren nach einem der vorhergehenden Ansprüche, **dadurch gekennzeichnet, dass** an mindestens einer in einer Zuleitung (37) für frische Behandlungsflüssigkeit angeordneten Messstelle (35) ein Ist-Wert einer Leitfähigkeit von zugeführter, frischer Behandlungsflüssigkeit ermittelt wird.

## Claims

1. A method for operating a pasteurizing device (1) for pasteurizing foods filled into sealed containers (2), comprising
transporting containers (2) which are filled with foods and sealed through multiple treatment zones (3) in a transport direction (9) by means of a transport means (7),
treating the foods in the treatment zones (3) by applying a tempered, aqueous treatment liquid (5) to an exterior (6) of the containers (2), wherein treatment liquid (5) with a specific temperature is supplied to each treatment zone (3) via a feed pipe (15), such that the foods are pre-heated, in transport direction (9), in at least one warm-up zone (10, 11), heated, following in transport direction (9), to pasteurizing temperature in at least one pasteurizing zone (12), and cooled down, following in transport direction (9), in at least one cool-down zone (13, 14),
and wherein the treatment liquid (5) is collected in the treatment zones (3) after application to the containers (2), and collected treatment liquid (5) is re-supplied to at least one treatment zone (5) for reuse via circulation circuit pipes (24) of a circulation circuit (23),
and wherein a partial quantity of treatment liquid is continuously removed from the treatment liquid (5) circulated in the circulation circuit (23) or from the treatment liquid (5) in a treatment zone (3) by means of at least one liquid-removal means (26) for forming at least one partial flow of the treatment liquid (5), which at least one partial flow is supplied, via a feeding pipe (27) of at least one bypass (28), to a membrane filtration means (29) arranged in the at least one bypass (28) and filtered, and subsequently fed back again into the circulation circuit (23) or into a treatment zone (3),
and wherein process chemicals are added to the treatment liquid (5),
**characterized in that**
a biocide, selected from a group consisting of hypochlorite, peracetic acid, chlorine dioxide and bronopol, or a mixture of biocides selected from this group, is apportioned to the treatment liquid as process chemical, such that a concentration of the biocide, or a total concentration of biocides, does not exceed 0.4 mmol/L,
and that a pH-regulating agent comprising at least one inorganic or organic acid is apportioned to the treatment liquid as process chemical, such that a pH value of the treatment liquid (5) is set to a range from 3.5 to 7.0.

2. The method according to claim 1, **characterized in that** chlorine dioxide is apportioned to the treatment liquid (5) as biocide.

3. The method according to claim 1 or 2, **characterized in that** the biocide is apportioned to a volume flow of the treatment liquid (5), which volume flow of the treatment liquid (5) is run in a circulation circuit pipe (24) leading, in terms of flow dynamics, to a cool-down zone (14).

4. The method according to any one of the preceding claims, **characterized in that** the biocide is apportioned to the treatment liquid (5) at at least one dosing point (33) arranged in the circulation circuit (23) or in a treatment zone (3), at which dosing point (33) treatment liquid (5) is run at a temperature of 20°C to 55°C.

5. The method according to any one of the preceding claims, **characterized in that** the biocide is apportioned to the treatment liquid (5) at at least one dosing point (33) arranged in the at least one bypass (28) downstream, in terms of flow dynamics, of a membrane filtration means (29).

6. The method according to any one of the preceding claims, **characterized in that** at least one actual value of the biocide concentration in the treatment liquid (5) is detected by means of at least one biocide concentration measurement sensor (34, 39) at at least one measurement point (35), and, on the basis of the actual value detected at the at least one measurement point (35), a concentration of the biocide in the treatment liquid (5) is manipulated with regard to a specifiable target value for the concentration of the biocide, by apportioning the biocide by means of at least one dosing means (32, 38) at at least one dosing point (33).

7. The method according to claim 6, **characterized in that** at least one actual value of the biocide concentration is detected at at least one measurement point (35) arranged in the circulation circuit (23) or in a treatment zone (3), at which measurement point (35) treatment liquid (5) is run at a temperature of 20°C to 55°C.

8. The method according to any one of the preceding claims, **characterized in that** a pH-regulating agent comprising at least one acid selected from a group consisting of sulphuric acid, phosphoric acid, formic acid, acetic acid, citric acid, gluconic acid, lactic acid, heptagluconic acid, or a mixture of acids selected from this group, is apportioned to the treatment liquid (5).

9. The method according to any one of the preceding claims, **characterized in that** the pH-regulating agent is apportioned to the treatment liquid (5) at at least one dosing point (33), at which dosing point (33) treatment liquid (5) is run at a temperature of 40°C to 90°C.

10. The method according to any one of the preceding claims, **characterized in that** at least one complex-forming acid selected from a group consisting of gluconic acid, lactic acid, citric acid, or a mixture of acids selected from this group, is apportioned to the treatment liquid as process chemical(s), such that a concentration of the at least one complex-forming acid, or a total concentration of the complex-forming acids, does not exceed 2.2 mmol/L.

11. The method according to claim 10, **characterized in that** the at least one complex-forming acid is apportioned to the treatment liquid (5) at at least one dosing point (33), at which dosing point (33) treatment liquid (5) is run at a temperature of 55°C to 95°C.

12. The method according to any one of the preceding claims, **characterized in that** at least one complex-forming phosphonic acid selected from a group consisting of (1-Hydroxy-1,1-ethanediyl)bis(phosphonic acid), 3-Carboxy-3-phosphonohexanedioic acid, Diethylenetriamine pentamethylene phosphonic acid, Aminotris(methylenephosphonic acid), or at least one phosphonate of a phosphonic acid selected from this group, or a mixture of phosphonic acids and/or phosphonates selected from this group, is apportioned to the treatment liquid as process chemical(s), such that a concentration of the at least one complex-forming phosphonic acid or of the at least one phosphonate, or a total concentration of the apportioned, complex-forming phosphonic acids and/or phosphonates, does not exceed 0.2 mmol/L.

13. The method according to claim 12, **characterized in that** the at least one complex-forming phosphonic acid and/or the at least one complex-forming phosphonate is apportioned to the treatment liquid (5) at at least one dosing point (33), at which dosing point (33) treatment liquid (5) is run at a temperature of 55°C to 95°C.

14. The method according to any one of the preceding claims, **characterized in that** a divalent zinc salt is apportioned to the treatment liquid as process chemical, such that a concentration of the divalent zinc salt does not exceed 0.06 mmol/L.

15. The method according to any one of the preceding claims, **characterized in that** an oligomer or polymer substance selected from a group consisting of polyphosphates, water-soluble polyacrylates and copolymers of maleic acid and acrylic acid, or a mixture of oligomer or polymer substances selected from this group, is apportioned to the treatment liquid as process chemical, such that a concentration of the apportioned oligomer or polymer substance, or a total concentration of the apportioned oligomer or polymer substances, does not exceed 0.4 g/L.

16. The method according to any one of the preceding claims, **characterized in that** a phosphoric ester, or a mixture of phosphoric esters, is apportioned to the treatment liquid as process chemical, such that a concentration of the phosphoric ester, or a total concentration of the phosphoric esters, does not exceed 0.1 g/L.

17. The method according to any one of the preceding claims, **characterized in that** at least one actual value of a concentration of at least one chemical substance contained in the treatment liquid (5) and/or of at least one process chemical added and/or of at least one internal standard added is detected by means of at least one concentration measurement sensor (34) at at least one measurement point (35), and, on the basis of the actual value detected by means of the at least one concentration measurement sensor (34) at the at least one measurement point (35), a concentration of the at least one contained chemical substance and/or of the at least one process chemical added is manipulated with regard to a specifiable target value for the concentration of the at least one chemical substance contained in the treatment liquid and/or of the at least one process chemical added and/or of the at least one internal standard added, by apportioning at least one process chemical and/or the at least one process chemical added at at least one dosing point (33) by means of at least one dosing means (32).

18. The method according to claim 17, **characterized in that** at least one actual value of a pH value of the treatment liquid is detected by means of at least one pH measurement sensor (34, 42) at at least one measurement point (35).

19. The method according to claim 18, **characterized in that** the at least one actual value of a pH value of the treatment liquid (5) is detected at at least one measurement point (35), at which measurement point (35) treatment liquid is run at a temperature of 40°C to 90°C.

20. The method according to any one of the claims 17 to 19, **characterized in that** an actual value of a water hardness of the treatment liquid is detected by means of at least one Ca²⁺ and/or Mg²⁺ measurement sensor (34, 44) at at least one measurement point (35).

21. The method according to claim 20, **characterized in that** an actual value of a water hardness of the treatment liquid is detected by means of at least one Ca²⁺ and/or Mg²⁺ measurement sensor (34, 44) at at least one measurement point (35) arranged in a feed pipe (37) for fresh treatment liquid.

22. The method according to any one of the preceding claims, **characterized in that** an actual value of a conductivity of supplied, fresh treatment liquid is detected at at least one measurement point (35) arranged in a feed pipe (37) for fresh treatment liquid.

## Revendications

1. Procédé de fonctionnement d'un dispositif de pasteurisation (1) pour la pasteurisation de produits alimentaires conditionnés dans des récipients fermés (2), comprenant le transport des récipients (2) remplis de produits alimentaires et fermés à travers plusieurs zones de traitement (3) dans une direction de transport (9) à l'aide d'un moyen de transport (7),
le traitement des produits alimentaires dans les zones de traitement (3) par l'application d'un liquide de traitement aqueux tempéré (5) sur une face externe (6) des récipients (2), dans lequel, dans chaque zone de traitement (3), est introduit, par l'intermédiaire d'une conduite d'alimentation (15), un liquide de traitement (5) avec une température déterminée, de façon à ce que les produits alimentaires dans les récipients fermés (2) soient pré-chauffés, dans la direction de transport (9), dans au moins une zone de chauffage (10, 11) et soient chauffés ensuite, dans la direction de transport (9), dans au moins une zone de pasteurisation (12) à une température de pasteurisation et soient refroidis ensuite, dans la direction de transport (9), dans au moins une zone de refroidissement (13, 14),
et dans lequel le liquide de traitement (5), après l'application sur les récipients (2) dans les zones de traitement (3) est collecté et le liquide de traitement (5) collecté est réintroduit pour une réutilisation, par l'intermédiaire de conduites de recirculation (24) d'un circuit de recirculation (23), dans au moins une zone de traitement (5),
et dans lequel, à l'aide d'au moins un moyen de prélèvement de liquide (26), une quantité partielle de liquide de traitement est prélevée en permanence dans le liquide de traitement (5) circulant dans le circuit de recirculation (23) ou dans le liquide de traitement (5) dans une zone de traitement (3) pour la formation d'au moins un flux partiel du liquide de traitement (5), cet au moins un flux partiel étant introduit, par l'intermédiaire d'une conduite d'alimentation (27) d'au moins une dérivation (28), dans un dispositif de filtration par membrane (29), disposé dans l'au moins une dérivation (28), et filtré puis réintroduit dans le circuit de recirculation (23) ou dans une zone de traitement (3),
et dans lequel, au liquide de traitement (5) sont ajoutés des produits chimiques de processus,
**caractérisé en ce que**
au liquide de traitement, en tant que produit chimique de processus, est ajouté un biocide, sélectionné dans un groupe constitué de l'hypochlorite, de l'acide peracétique, du dioxyde de chlore et du bronopol ou un mélange de biocides sélectionnés dans ce groupe, de façon à ce qu'une concentration du biocide ou une concentration totale de biocides ne dépasse par 0,4 mmol/l,
et **en ce que**, au liquide de traitement, en tant que produit chimique de processus, est ajouté un produit de régulation du pH comprenant au moins un acide inorganique ou organique, de façon à ce qu'une valeur de pH du liquide de traitement (5) soit ajustée à une plage de 3,5 à 7,0.

2. Procédé selon la revendication 1, **caractérisé en ce que**, au liquide de traitement (5) est ajouté du dioxyde de chlore en tant que biocide.

3. Procédé selon la revendication 1 ou 2, **caractérisé en ce que** le biocide est ajouté à un débit volumique du liquide de traitement (5), ce débit volumique du liquide de traitement (5) étant conduit dans une conduite de recirculation (24) dont le flux conduit à une zone de refroidissement (14).

4. Procédé selon l'une des revendications précédentes, **caractérisé en ce que** le biocide est ajouté au liquide de traitement (5) au niveau d'au moins un point de dosage (33) disposé dans le circuit de recirculation (23) ou une zone de traitement (3), le liquide de traitement (5) étant conduit avec une température de 20 °C à 55 °C au niveau de ce point de dosage (33).

5. Procédé selon l'une des revendications précédentes, **caractérisé en ce que** le biocide est ajouté au liquide de traitement (5) au niveau d'au moins un point de dosage (33) disposé dans l'au moins une dérivation (28) en aval d'un dispositif de filtration par membrane (29).

6. Procédé selon l'une des revendications précédentes, **caractérisé en ce que** l'au moins une valeur effective de la concentration en biocide dans le liquide de traitement (5) est déterminée au niveau d'au moins un point de mesure (35) au moyen d'au moins un capteur de mesure de concentration en biocide (34, 39) et une concentration en biocide dans le liquide de traitement (5) est influencée, sur la base de la valeur effective déterminée au niveau de l'au moins un point de mesure (35), par l'ajout du biocide au niveau d'au moins un point de dosage (33), au moyen d'au moins un dispositif de dosage (32, 38), en fonction d'une valeur de consigne prédéterminée pour la concentration du biocide.

7. Procédé selon la revendication 6, **caractérisé en ce qu'**au moins une valeur effective de la concentration en biocide est déterminée au niveau d'au moins un point de mesure (35) disposé dans le circuit de recirculation (23) ou une zone de traitement (3), le liquide de traitement (5) étant conduit avec une température de 20 °C à 55 °C au niveau de ce point de mesure (35).

8. Procédé selon l'une des revendications précédentes, **caractérisé en ce que**, au liquide de traitement (5), est ajouté un moyen de régulation de pH comprenant au moins un acide sélectionné dans un groupe constitué de l'acide sulfurique, l'acide phosphorique, l'acide formique, l'acide acétique, l'acide citrique, l'acide gluconique, l'acide lactique, l'acide glucoheptonique ou un mélange d'acides sélectionnés dans ce groupe.

9. Procédé selon l'une des revendications précédentes, **caractérisé en ce que** le moyen de régulation de pH est ajouté au liquide de traitement (5) au niveau d'au moins un point de dosage (33), le liquide de traitement (5) étant conduit avec une température de 40 °C à 90 °C au niveau de ce point de dosage (33).

10. Procédé selon l'une des revendications précédentes, **caractérisé en ce que**, au liquide de traitement (5), est ajouté, en tant que produit(s) chimique(s) de processus, au moins un acide complexant sélectionné dans un groupe constitué de l'acide gluconique, de l'acide lactique, de l'acide citrique ou un mélange d'acides sélectionnés dans ce groupe, de façon à ce qu'une concentration de l'au moins un acide complexant ou une concentration totale des acides complexants ne dépasse pas 2,2 mmol/l.

11. Procédé selon la revendication 10, **caractérisé en ce que** l'au moins un acide complexant est ajouté au liquide de traitement (5) au niveau d'au moins un point de dosage (33), le liquide de traitement (5) étant conduit avec une température de 55 °C à 95 °C au niveau de ce point de mesure (33).

12. Procédé selon l'une des revendications précédentes, **caractérisé en ce que**, au liquide de traitement (5), est ajouté, en tant que produit(s) chimique(s) de processus, au moins un acide phosphonique complexant sélectionné dans un groupe constitué de 1-hydroxyéthane-(1,1-acide dipohosphonique), acide 3-carboxy-3-phosphonoadipique, acide diéthylènetriaminepenta(méthylènephosphonique), acide amino-tris(méthylènephosphonique) ou au moins un phosphonate d'un acide phosphonique sélectionné dans le groupe ou un mélange d'acides phosphoniques et/ou de phosphonates sélectionnés dans ce groupe, de façon à ce qu'une concentration de l'au moins un acide phosphonique ou de l'au moins un phosphonate complexant, ou une concentration totale des acides phosphoniques et/ou phosphonates complexants ajoutés ne dépasse pas 0,2 mmol/l.

13. Procédé selon la revendication 12, **caractérisé en ce que** l'au moins un acide phosphonique complexant et/ou l'au moins un phosphonate complexant est ajouté au liquide de traitement (5) au niveau d'au moins un point de dosage (33), le liquide de traitement (5) étant conduit avec une température de 55 °C à 95 °C au niveau de ce point de dosage (33).

14. Procédé selon l'une des revendications précédentes, **caractérisé en ce que**, au liquide de traitement (5), est ajouté, en tant que produit chimique de processus, un sel de zinc bivalent de façon à ce qu'une concentration en sel de zinc bivalent ne dépasse pas 0,06 mmol/l.

15. Procédé selon l'une des revendications précédentes, **caractérisé en ce que**, au liquide de traitement (5), est ajouté, en tant que produit chimique de processus, une substance oligomère ou polymère sélectionnée dans un groupe constitué de polyphosphates, de polyacrylates solubles dans l'eau et de copolymères constitués d'acide maléique et d'acide acrylique ou un mélange de substances oligomères ou polymères sélectionnées dans le ce groupe, de façon à ce qu'une concentration de la substance oligomère ou polymère ou une concentration totale des substances oligomères ou polymères ajoutées ne dépasse pas 0,4 g/l.

16. Procédé selon l'une des revendications précédentes, **caractérisé en ce que**, au liquide de traitement (5), est ajouté, en tant que produit chimique de processus, un ester d'acide phosphorique ou un mélange d'esters d'acide phosphorique, de façon à ce qu'une concentration en ester d'acide phosphorique ou une concentration totale des esters d'acide phosphorique ne dépasse pas 0,1 g/l.

17. Procédé selon l'une des revendications précédentes, **caractérisé en ce que** l'au moins une valeur effective d'une concentration d'au moins une substance chimique contenue dans le liquide de traitement (5) et/ou d'au moins un produit chimique ajouté et/ou d'au moins un standard interne ajouté, est déterminée au niveau d'au moins un point de mesure (35) au moyen d'au moins un capteur de mesure de concentration (34) et une concentration de l'au moins une substance chimique contenue et/ou de l'au moins un produit chimique ajouté est influencée, sur la base de la valeur effective déterminée, au niveau de l'au moins un point de mesure (35), au moyen de l'au moins un capteur de mesure de concentration (34), par l'ajout d'au moins un produit chimique de processus et/ou de l'au moins un produit chimique ajouté au niveau d'au moins un point de dosage (33) au moyen d'au moins un dispositif de dosage (32), en fonction d'une valeur de consigne prédéterminée pour la concentration de l'au moins une substance chimique contenue dans le liquide de traitement et/ou de l'au moins un produit chimique de processus ajouté et/ou de l'au moins un standard interne ajouté.

18. Procédé selon la revendication 17, **caractérisé en ce que**, au moyen d'au moins un capteur de mesure de pH (34, 42), au moins une valeur effective d'une valeur de pH du liquide de traitement est déterminée au niveau d'au moins un point de mesure (35).

19. Procédé selon la revendication 18, **caractérisé en ce que** l'au moins une valeur effective d'une valeur de pH du liquide de traitement (5) est déterminée au niveau d'au moins un point de mesure (35), le liquide de traitement étant conduit avec une température de 40 °C à 90 °C au niveau de ce point de mesure (35).

20. Procédé selon l'une des revendications 17 à 19, **caractérisé en ce que**, au moyen d'au moins un capteur de mesure de Ca²⁺ et/ou de Mg²⁺ (34, 44), une valeur effective d'une dureté de l'eau du liquide de traitement est déterminée au niveau d'au moins un point de mesure (35).

21. Procédé selon la revendication 20, **caractérisé en ce que**, au moyen d'au moins un capteur de mesure de Ca²⁺ et/ou de Mg²⁺ (34, 44), une valeur effective d'une dureté de l'eau du liquide de traitement est déterminée au niveau d'au moins un point de mesure (35) disposé dans une conduite d'alimentation (37) en liquide de traitement frais.

22. Procédé selon l'une des revendications précédentes, **caractérisé en ce que**, au niveau d'au moins un point de mesure (35) disposé dans une conduite d'alimentation (37) en liquide de traitement frais, est déterminée une valeur effective d'une conductivité du liquide de traitement frais introduit.
